# EUROPEAN PATENT SPECIFICATION

(11) **EP 2 085 706 B1**
(45) Date of publication and mention of the grant of the patent: **02.05.2018**
(21) Application number: 09151739.1
(22) Date of filing: 30.01.2009
(51) Int. Cl.: F24D 11/02, F24D 19/10, G05D 23/19, H02J 3/28

(54) **Hot water storage type heat pump unit**
Wärmepumpeneinheit vom Heisswasserspeichertyp
Pompe à chaleur du type accumulateur d'eau chaude

(30) Priority: 01.02.2008 JP 2008022721; 01.02.2008 JP 2008022871; 09.01.2009 JP 2009003665; 09.01.2009 JP 2009003667
(43) Date of publication of application: 05.08.2009
(73) Proprietor: Daikin Industries, Ltd., Osaka-shi, Osaka 530-8323 (JP)
(72) Inventor: Satou, Toshiaki, Shiga 525-0044 (JP); Fukuda, Kazuya, Shiga 525-0044 (JP); Tsuchino, Takashi, Shiga 525-0044 (JP); Kataoka, Hidehiko, Shiga 525-0044 (JP); Yabuki, Toshio, Shiga 525-0044 (JP)
(74) Representative: Hoffmann Eitle

(56) References cited:
- JP-A- 2004 170 025
- JP-A- 2006 329 581

## Description

### TECHNICAL FIELD

The present invention relates to a hot water storage type heat source device.

### BACKGROUND ART

As one of hot water storage type heat source devices, there has conventionally been a hot water storage type heater/water heater composed of a hot water storage tank and a heat pump unit for heating the water in the hot water storage tank, in which hot water in the hot water storage tank is circulated via a radiator for heating, and the hot water in the hot water storage tank is used for hot water supply (see, e.g., JP 2006-329581 A (PTL 1)).

In Europe, such a hot water storage type heater/water heater sometimes receives electric power supplied from a peak cut power source from a viewpoint of power load reduction and power rate reduction. Power supply from the peak cut power source is stopped on account of electric power companies, and since the whole system of the device is stopped when the electric power supply from the peak cut power source is stopped, the state of a heat pump unit placed outside residential space such as an outdoor environment cannot be monitored with a temperature sensor and the like, which causes a problem of inability to perform piping antifreeze operation and the like.
Patent Literature: JP 2006-329581 A
JP 2004 170025 A discloses an electric water heater comprising a hot water storage tank, a water supply pipe provided at the lower part of the hot water storage tank, a hot water supply pipe provided at the upper part of the hot water storage tank, a lower heater provided in the hot water storage tank at its lower part, an upper heater provided in the hot water storage tank at its upper part, and a heat exchanger provided near the upper heater for heat exchange between hot water in the hot water storage tank and it. A commercial power supply which is present to cut off energization at a given time is used as the heating power supply for the upper heater and usual commercial power supplies are used as control water supply for the upper heater and as the heating power supply and a control power supply for the lower heater.

### SUMMARY OF INVENTION

### TECHNICAL PROBLEM

Accordingly, an object of the present invention is to provide a hot water storage type heat source device which can monitor the state of a heating section with a temperature sensor and the like so as to appropriately perform piping antifreeze operation and the like even when electric power supply from a peak cut power source is stopped on account of the power supply side.

### SOLUTION TO PROBLEM

In order to achieve the above object, there is provided a hot water storage type heat source device according to claim 1. Further, there is provided a hot water storage type heat source device, comprising:
a heating section for heating water with electric power from a peak cut power source whose power supply may be stopped on account of a power supply side;
boiling control sections for receiving electric power supplied from a commercial power source other than the peak cut power source and controlling the heating section; and
   a hot water storage section for storing hot water heated by the heating section, wherein
   when electric power supply from the peak cut power source is stopped and thereby the heating section is stopped, the boiling control sections operate with electric power from the commercial power source.

According to the above configuration, even when the electric power supply from the peak cut power source is stopped on account of the power supply side and thereby the heating section is stopped, the boiling control section operates with the electric power from the commercial power source. Therefore, since the boiling control section continues operating without suffering the power off even while power supply from the peak cut power source is stopped, it becomes possible to constantly keep on monitoring the state of the heating section with a temperature sensor and the like. This makes it possible to detect outside air temperature so as to appropriately perform, for example, piping antifreeze operation.

In one embodiment, which does not form part of the invention the hot water storage type heat source device further comprising
an indoor-side utilization section for receiving electric power supplied from the commercial power source and utilizing the hot water stored in the hot water storage section as a heat source for at least either heating or hot water supply on an indoor side, wherein
when electric power supply from the peak cut power source is stopped and thereby the heating section is stopped, the boiling control sections and the indoor-side utilization section operate with the electric power supplied from the commercial power source.

According to the embodiment, even when the electric power supply from the peak cut power source is stopped on account of the power supply side and thereby the heating section is stopped, the boiling control section and the indoor-side utilization section operate with the electric power from the commercial power source, so that the operation to use the hot water stored in the hot water storage section as a heat source for at least the indoor-side heating or hot water supply can be continued. Accordingly, using at least the heat source stored in the hot water storage section to the greatest extent allows execution of heating operation and hot water supply operation without being influenced by the situation of the power supply side, and therefore amenity can be enhanced. Since the boiling control section and the indoor-side utilization section operate without suffering power off while the electric power supply from the peak cut power source is stopped, communication between the boiling control section and the indoor-side utilization section is carried out normally without causing communication failure and the like.

In one embodiment, which does not form part of the invention the boiling control section is placed in a boiling section having the heating section, and wherein
the boiling section has power source generation sections for the boiling control section for generating supply voltage for the boiling control section with the electric power supplied from the commercial power source.

According to the embodiment, supply voltage for the boiling control section is generated by the power source generation section for the boiling control section upon reception of electric power supplied from the commercial power source, and the supply voltage from the power source generation section for the boiling control section is fed to the boiling control section placed in the boiling section having a heating section. Consequently, even when the electric power supply from the peak cut power source is stopped on account of the power supply side, the boiling control section and the indoor-side utilization section can operate without suffering power off.

In one embodiment which does not form part of the invention, the indoor-side utilization section operates with electric power supplied from the commercial power source via the boiling section.

In one embodiment which does not form part of the invention, the indoor-side utilization section operates with supply voltage from the power source generation section for the boiling control section.

In one embodiment which does not form part of the invention, the boiling control section is placed in a boiling section (1) having the heating section, and wherein
the boiling section has a power source generation section for the boiling control section for generating supply voltage for the boiling control section with electric power supplied from the commercial power source via the indoor-side utilization section.

According to the embodiment, supply voltage for the boiling control section is generated by the power source generation section for the boiling control section upon reception of electric power supplied from the commercial power source via the indoor-side utilization section, and the supply voltage from the power source generation section for the boiling control section is fed to the boiling control section placed in the boiling section having a heating section. Since the electric power from the commercial power source is supplied to the power source generation section for the boiling control section via the indoor-side utilization section, a part of a source line and a communication line can be shared between the boiling section and the indoor-side utilization section, so that the number of interconnections can be reduced.

In one embodiment which does not form part of the invention, the indoor-side utilization section has an indoor-side power source generation section for generating power supply voltage for control with electric power supplied from the commercial power source, and wherein
the boiling control section operates with power supply voltage for control from the indoor-side power source generation section in the indoor-side utilization section, and is placed in a boiling section having the heating section.

According to the embodiment, in the indoor-side utilization section, power supply voltage for control is generated by the indoor-side power source generation section upon reception of electric power supplied from the commercial power source, and the power supply voltage for control from the indoor-side power source generation section is fed to the boiling control section placed in the boiling section having a heating section. Thus, the power supply voltage for control for both the indoor-side utilization section and the boiling control section is collectively generated by the indoor-side power source generation section on the side of the indoor-side utilization section, so that a power supply circuit can be shared and costs can be reduced. A part of a control power source line and a communication line between the boiling section and the indoor-side utilization section can be shared, so that the number of interconnections can be reduced.

In one embodiment which does not form part of the invention, the indoor-side utilization section has an indoor-side power source generation section for generating power supply voltage for control with electric power supplied from the commercial power source, and wherein
the boiling control section operates with power supply voltage for control from the indoor-side power source generation section and is placed in the indoor-side utilization section.

According to the embodiment, in the indoor-side utilization section, power supply voltage for control is generated by the indoor-side power source generation section upon reception of electric power supplied from the commercial power source, and the power supply voltage for control from the indoor-side power source generation section is fed to the boiling control section placed in the indoor-side utilization section. Thus, the boiling control section is placed on the side of the indoor-side utilization section together with other sections such as the indoor-side control section which controls the indoor-side utilization section, so that one indoor-side power source generation section can implement control functions of both the boiling section and the indoor-side utilization section, the power supply circuit can be shared, and costs can be reduced.

Also, there is provided, a hot water storage type heat source device, comprising:
a boiling section having a heating section for heating water with electric power from a peak cut power source whose power supply may be stopped on account of a power supply side;
a hot water storage section for storing hot water heated by the boiling section; and
an indoor-side utilization section for receiving electric power supplied from a commercial power source other than the peak cut power source and utilizing the hot water stored in the hot water storage section as a heat source for at least either heating or hot water supply on an indoor side, wherein
when electric power supply from the peak cut power source is stopped and thereby the boiling section is stopped, the indoor-side utilization section operates with electric power from the commercial power source.

According to the above configuration, even when the electric power supply from the peak cut power source is stopped on account of the power supply side and thereby the boiling section is stopped, the indoor-side utilization section operates with the electric power from the commercial power source, so that the operation to use the hot water stored in the hot water storage section as a heat source for at least either the indoor-side heating or the hot water supply can be continued. Accordingly, using at least the heat source stored in the hot water storage section to the greatest extent possible allows execution of heating operation and hot water supply operation without being influenced by the situation of the power supply side, and therefore amenity can be enhanced.

In one embodiment which does not form part of the invention, the indoor-side utilization section has at least either a heating actuator for feeding hot water to a heater, or a hot water supply actuator for feeding hot water to a water heater.

According to the embodiment, controlling the heating actuator (e.g., a mixing valve which controls the temperature of hot water fed to a heating circulating pump and to a heater) provided in the indoor-side utilization section allows easy control on the heating operation using the heat source of the hot water storage section, or controlling the hot water supply actuator (e.g., a mixing valve which controls hot water supply temperature) provided in the indoor-side utilization section allows easy control on the hot water supply operation using the heat source of the hot water storage section.

In one embodiment which does not form part of the invention, the heating section of the boiling section has a heat pump unit.

According to the embodiment, power consumption can be reduced by using an efficient heat pump unit for the heating section in the boiling section.

In one embodiment which does not form part of the invention, the heating section of the boiling section has an electrothermal heater.

According to the embodiment, heating capability can accurately be controlled with supplied power by using an electrothermal heater for the heating section. Moreover, using, for example, both a heat pump unit and an electrothermal heater and using the electrothermal heater as auxiliary equipment make it possible to enhance heating capability and to increase the boiling temperature by the heating section in the case where capability of the heat pump unit cannot fully be demonstrated due to low outdoor temperature.

In one embodiment which does not form part of the invention, the hot water storage type heat source device further comprising
an electrothermal heater which is driven by the commercial power source separately from the heating section of the boiling section for heating water in the hot water storage section.

According to the embodiment, the electrothermal heater provided separately from the heating section of the boiling section is driven with commercial power source to heat water, so that even when the electric power supply from the peak cut power source is stopped on account of the power supply side, heating operation and hot water supply operation can be continued longer.

In one embodiment which does not form part of the invention, the indoor-side utilization section has an electrothermal heater setting section for setting whether or not heating by the electrothermal heater is performed when the electric power supply from the peak cut power source is stopped.

According to the embodiment, when the electric power supply from the peak cut power source is stopped, heating control of the electrothermal heater is performed based on the setting by the electrothermal heater setting section. This provides users with increased number of choices and enhances usability.

In one embodiment which does not form part of the invention, the boiling section has a boiling control section for controlling the heating section, wherein
the indoor-side utilization section has an indoor-side control section which communicates with the boiling control section in the boiling section and which controls operation of the indoor-side utilization section, and a communication failure detection section for detecting communication failure between the boiling control section and the indoor-side control section, and wherein
when the communication failure detection section detects communication failure between the boiling control section and the indoor-side control section, the indoor-side control section determines that the boiling section is in a stopped state and continues operation of the indoor-side utilization section.

According to the embodiment, when the communication failure detection section detects communication failure between the boiling control section and the indoor-side control section, the indoor-side control section determines that the boiling section is in a stopped state and continues operation of the indoor-side utilization section. The indoor-side control section determines that the electric power supply from the peak cut power source is stopped until the communication failure between the boiling control section and the indoor-side control section is recovered, and the indoor-side control section performs heating operation and hot water supply operation with the hot water stored in the hot water storage section as a heat source without the boiling section boiling the hot water in the hot water storage section in the stopped state. Thus, detection of communication failure between the boiling control section and the indoor-side control section by the communication failure detection section is used for detecting the stop of electric power supply from the peak cut power source, so that it is not necessary to separately provide a means to detect supply interruption of the peak cut power source, and thereby costs can be reduced.

In one embodiment which does not form part of the invention, the hot water storage type heat source device further comprising
a peak cut power supply detection section for detecting whether or not electric power supply from the peak cut power source is stopped, wherein
when the peak cut power supply detection section detects stop of electric power supply from the peak cut power source, the indoor-side control section determines that the boiling section is in a stopped state and continues operation of the indoor-side utilization section.

According to the embodiment, when the peak cut power supply detection section detects the stop of electric power supply from the peak cut power source, the indoor-side control section determines that the boiling section is in a stopped state and continues operation of the indoor-side utilization section, and therefore it becomes possible to reliably detect the supply interruption from the peak cut power source and to shift to an operation mode executed by only the indoor-side utilization section.

In one embodiment which does not form part of the invention, if the peak cut power supply detection section detects stop of electric power supply from the peak cut power source when the indoor-side utilization section receives electric power supplied from the commercial power source and starts operation, the indoor-side control section operates the indoor-side utilization section, and then
when the peak cut power supply detection section detects that the electric power supply from the peak cut power source is resumed during operation of the indoor-side control section, the indoor-side control section communicates with the boiling control section, and operates the indoor-side utilization section in cooperation with the boiling control section.

According to the embodiment, if the peak cut power supply detection section detects the stop of electric power supply from the peak cut power source when the indoor-side utilization section receives electric power supplied from the commercial power source and starts operation, the indoor-side control section operates the indoor-side utilization section without cooperation with the boiling section. Next, when the peak cut power supply detection section detects that the electric power supply from the peak cut power source is resumed during operation of the indoor-side control section, the indoor-side control section communicates with the boiling control section and operates the indoor-side utilization section in cooperation with the boiling control section. Therefore, in the case where the electric power supply from the peak cut power source is out of service upon power application to the indoor-side utilization section, the indoor-side control section starts operation of the indoor-side utilization section, and then when supply of the electric power from the peak cut power source is resumed, the indoor-side utilization section can communicate with the boiling control section and perform operation corresponding to the state of the boiling control section side.

In one embodiment which does not form part of the invention, when the peak cut power supply detection section detects that electric power supply from the peak cut power source is in service, and the communication failure detection section detects communication failure between the boiling control section and the indoor-side control section, the indoor-side control section determines occurrence of communication failure.

According to the embodiment, when the peak cut power supply detection section detects that the electric power supply from the peak cut power source is in service, and the communication failure detection section detects communication failure between the boiling control section and the indoor-side control section, the indoor-side control section determines there is communication failure, and therefore when the electric power supply from the peak cut power source is stopped, the indoor-side control section does not determine it as communication failure, so that reliable determination of communication failure can be achieved.

In one embodiment which does not form part of the invention, the indoor-side utilization section comprises:
a communication failure display section for displaying that communication between the boiling control sections and the indoor-side control sections has communication failure; and
a peak cut power source status display section for displaying a status of electric power supply from the peak cut power source detected by the peak cut power supply detection section, and wherein
when the peak cut power supply detection section detects stop of electric power supply from the peak cut power source, and the communication failure detection section detects communication failure between the boiling control section and the indoor-side control section, the communication failure display section does not display communication failure on the communication failure display section.

According to the embodiment, the status of the electric power supply from the peak cut power source detected by the peak cut power supply detection section is displayed by the peak cut power source status display section, so that the user can easily grasp the status of the electric power supply from the peak cut power source. Moreover, when the peak cut power supply detection section detects the stop of electric power supply from the peak cut power source, and the communication failure detection section detects communication failure between the boiling control section and the indoor-side control section, the communication failure is not displayed on the communication failure display section. Therefore, when the electric power supply from the peak cut power source is out of service, the user does not accidentally recognize it as a communication failure.

In one embodiment which does not form part of the invention, upon stop of electric power supply from the peak cut power source, a signal indicating peak cut is outputted from the peak cut power source to a power supply line, and wherein
the peak cut power supply detection section detects stop of electric power supply from the peak cut power source in response to the signal indicating peak cut outputted from the peak cut power source to the power supply line.

According to the embodiment, the peak cut power supply detection section detects the stop of electric power supply from the peak cut power source in response to a signal indicating the peak cut outputted from the peak cut power source to the power supply line, so that it is not necessary to separately provide a circuit for monitoring the voltage from the peak cut power source, and therefore supply interruption of the peak cut power source can be detected with a simple configuration.

In one embodiment which does not form part of the invention, the hot water storage type heat source device further comprising
a circulating pump for circulating the hot water stored in the hot water storage section via the boiling section, wherein
during a peak cut period in which the peak cut power supply detection section detects stop of electric power supply from the peak cut power source, the indoor-side control section drives the circulating pump with electric power from the commercial power source, and circulates the hot water stored in the hot water storage section via the boiling section.

According to the embodiment, during a peak cut period in which the peak cut power supply detection section detects the stop of electric power supply from the peak cut power source, the indoor-side control section drives the circulating pump with the electric power from a commercial power source and circulates the hot water stored in the hot water storage section via the boiling section, so that even when the outside air temperature is below zero, freezing of a circulating route between the hot water storage section and the boiling section can be prevented.

In one embodiment which does not form part of the invention, during a peak cut period in which the peak cut power supply detection section detects stop of electric power supply from the peak cut power source, the indoor-side control section intermittently operates the circulating pump.

According to the embodiment, during a peak cut period in which the peak cut power supply detection section detects the stop of electric power supply from the peak cut power source, the indoor-side control section intermittently operates the circulating pump, so that it become possible to prevent freezing of the circulating route between the hot water storage section and the boiling section, while preventing the hot water from being cooled by the low outside air temperature as much as possible, and to reduce power consumption.

In one embodiment which does not form part of the invention, the indoor-side utilization section:
uses hot water stored in the hot water storage section as a heat source for heating and hot water supply on an indoor side;
has a priority setting section for setting a priority between the indoor side heating and the indoor side hot water supply; and
performs the indoor-side heating or the indoor-side hot water supply in preference to either one of the operations based on the priority set by the priority setting section when the boiling section is stopped due to stop of electric power supply from the peak cut power source and so the indoor-side utilization section operates with electric power from the commercial power source.

According to the embodiment, when the boiling section is stopped due to the stop of electric power supply from the peak cut power source and so the indoor-side utilization section operates with electric power from the commercial power source, either the indoor-side heating or the indoor-side hot water supply is performed in preference to either one of the operations based on the priority set by the priority setting section. This makes it possible to preferentially perform the operation desired by the user, and to thereby enhance user-friendliness.

### ADVANTAGEOUS EFFECTS OF INVENTION

As is clear from the above, according to the hot water storage type heat source device, which does not form part of the invention, it becomes possible to effectuate a hot water storage type heat source device which can constantly monitor the state of the boiling section with a temperature sensor and the like so as to appropriately perform piping antifreeze operation and the like even when electric power supply from a peak cut power source is stopped on account of the power supply side.

According to the hot water storage type heat source device of one embodiment, even when the electric power supply from the peak cut power source is stopped on account of the power supply side, the heating operation and the hot water supply operation can be continued by using the hot water stored in the hot water storage section as a heat source with a simple configuration.

According to the hot water storage type heat source device of one embodiment, supply voltage for the boiling control section is generated by the power source generation section for the boiling control section upon reception of electric power supplied from the commercial power source, and the supply voltage from the power source generation section for the boiling control section is fed to the boiling control section placed in the boiling section, so that even when the electric power supply from the peak cut power source is stopped on account of the power supply side, the boiling control section and the indoor-side utilization section can operate without suffering power off.

According to the hot water storage type heat source device of one embodiment, the electric power from the commercial power source is supplied to the power source generation section for the boiling control section via the indoor-side utilization section, so that a part of a source line and a communication line between the boiling section and the indoor-side utilization section can be shared, and thereby the number of interconnections can be reduced.

According to the hot water storage type heat source device of one embodiment, the power supply voltage for control for both the indoor-side utilization section and the boiling control section is collectively generated by the indoor-side power source generation section on the side of the indoor-side utilization section, so that a power supply circuit can be shared and costs can be reduced, while at the same time, a part of a control power source line and a communication line between the boiling section and the indoor-side utilization section can be shared, so that the number of interconnections can be reduced.

According to the hot water storage type heat source device of one embodiment, the boiling control section is placed on the side of the indoor-side utilization section together with the indoor-side control section which controls the indoor-side utilization section, so that one indoor-side power source generation section can implement control functions of both the boiling section and the indoor-side utilization section, the power supply circuit can be shared, and costs can be reduced.

According to the hot water storage type heat source device of one embodiment, a hot water storage type heat source device can be effectuated which can continue the heating operation and the hot water supply operation by using the hot water stored in the hot water storage section as a heat source with a simple configuration even when the electric power supply from the peak cut power source is stopped on account of the power supply side.

According to the hot water storage type heat source device of one embodiment, the heating actuator (e.g., a mixing valve which controls the temperature of hot water fed to a heating circulating pump and a heater) is provided in the indoor-side utilization section, so that the heating operation using the heat source in the hot water storage section can be controlled easily, or the hot water supply actuator (e.g., a mixing valve which controls hot water supply temperature) is provided in the indoor-side utilization section, so that the hot water supply operation using the heat source in the hot water storage section can be controlled easily.

According to the hot water storage type heat source device of one embodiment, reduction in power consumption can be achieved by using an efficient heat pump unit for the heating section in the boiling section.

According to the hot water storage type heat source device of one embodiment, heating capability can accurately be controlled with supplied power by using an electrothermal heater for the heating section, while at the same time, using, for example, both a heat pump unit and an electrothermal heater and using the electrothermal heater as auxiliary equipment make it possible to enhance heating capability and to increase the boiling temperature by the heating section in the case where capability of the heat pump unit cannot fully be demonstrated due to low outdoor temperature.

According to the hot water storage type heat source device of one embodiment, an electrothermal heater is provided separately from the heating section in the boiling section, and the electrothermal heater is driven with commercial power source to heat water, so that even when the electric power supply from the peak cut power source is stopped on account of the power supply side, heating operation and hot water supply operation can be continued for a long time.

According to the hot water storage type heat source device of one embodiment, detection of communication failure between the boiling control section and the indoor-side control section by the communication failure detection section is used for detecting the stop of the electric power supply from the peak cut power source, so that it is not necessary to separately provide a means to detect the stop of power supply from the peak cut power source, and thereby costs can be reduced.

According to the hot water storage type heat source device of one embodiment, when the peak cut power supply detection section detects the stop of electric power supply from the peak cut power source, the indoor-side control section determines that the boiling section is in a stopped state and continues operation of the indoor-side utilization section, and therefore it becomes possible to reliably detect the stop of supply from the peak cut power source and to shift to an operation mode executed by only the indoor-side utilization section.

According to the hot water storage type heat source device of one embodiment, in the case where the electric power supply from the peak cut power source is out of service upon power application to the indoor-side utilization section, the indoor-side control section starts operation of only the indoor-side utilization section, and then when supply of the electric power from the peak cut power source is resumed, the indoor-side utilization section can communicate with the boiling control section and perform operation in cooperation with the boiling control section side.

According to the hot water storage type heat source device of one embodiment, when the peak cut power supply detection section detects that the electric power supply from the peak cut power source is in service, and the communication failure detection section detects communication failure between the boiling control section and the indoor-side control section, the indoor-side control section determines there is communication failure, and therefore when the electric power supply from the peak cut power source is stopped, the indoor-side control section does not determine it as communication failure, so that reliable determination of communication failure can be achieved.

According to the hot water storage type heat source device of one embodiment, the status of the electric power supply from the peak cut power source detected by the peak cut power supply detection section is displayed by the peak cut power source status display section, so that the user can easily grasp the status of the electric power supply from the peak cut power source. Moreover, when the peak cut power supply detection section detects the stop of electric power supply from the peak cut power source, and the communication failure detection section detects communication failure between the boiling control section and the indoor-side control section, the communication failure is not displayed on the communication failure display section. Therefore, when the electric power supply from the peak cut power source is out of service, the user does not accidentally recognize it as a communication failure.

According to the hot water storage type heat source device of one embodiment, the peak cut power supply detection section detects the stop of electric power supply from the peak cut power source in response to a signal indicating the peak cut outputted from the peak cut power source to the power supply line, so that it is not necessary to separately provide a circuit for monitoring the voltage from the peak cut power source, and therefore supply interruption of the peak cut power source can be detected with a simple configuration.

According to the hot water storage type heat source device of one embodiment, when the peak cut power supply detection section detects the stop of electric power supply from the peak cut power source, the indoor-side control section drives the circulating pump with the electric power from a commercial power source and circulates the hot water stored in the hot water storage section via the boiling section, so that even when the outside air temperature is below zero, freezing of the circulating route between the hot water storage section and the boiling section can be prevented.

According to the hot water storage type heat source device of one embodiment, during a peak cut period in which the peak cut power supply detection section detects stop of the electric power supply from the peak cut power source, the indoor-side control section intermittently operates the circulating pump, so that it become possible to prevent freezing of the circulating route between the hot water storage section and the boiling section, while preventing the hot water from being cooled by the low outside air temperature as much as possible, and to reduce power consumption thereby.

According to the hot water storage type heat source device of one embodiment, when the boiling section is stopped due to the stop of electric power supply from the peak cut power source and so the indoor-side utilization section operates with electric power from the commercial power source, either the indoor-side heating or the indoor-side hot water supply is performed in preference to either one of the operations based on the priority set by the priority setting section, so that it becomes possible to preferentially perform the operation desired by the user, and to thereby enhance user-friendliness.

### BRIEF DESCRIPTION OF DRAWINGS

Fig. 1 is a block diagram of a hot water storage type heater/water heater as an example of a hot water storage type heat source device in a first embodiment of the invention;
Fig. 2 is a circuit diagram showing a specific configuration of the hot water storage type heater/water heater;
Fig. 3 is a block diagram of a hot water storage type heater/water heater as an example of a hot water storage type heat source device in a second embodiment of the invention;
Fig. 4 is a block diagram of a hot water storage type heater/water heater as an example of a hot water storage type heat source device in a third embodiment of the invention;
Fig. 5 is a block diagram of a hot water storage type heater/water heater as an example of a hot water storage type heat source device in a fourth embodiment of the invention;
Fig. 6 is a block diagram of a hot water storage type heater/water heater as an example of a hot water storage type heat source device in a fifth embodiment of the invention;
Fig. 7 is a block diagram of a hot water storage type heater/water heater as an example of a hot water storage type heat source device in a sixth embodiment of the invention;
Fig. 8 is a block diagram of a hot water storage type heater/water heater as an example of a hot water storage type heat source device in a eighth embodiment of the invention;
Fig. 9 is a circuit diagram showing a specific configuration of the hot water storage type heater/water heater;
Fig. 10 is a flow chart explaining the operation of a heating/hot water supply control section in the hot water storage type heater/water heater;
Fig. 11 is a block diagram of a hot water storage type heater/water heater as an example of a hot water storage type heat source device in a ninth embodiment of the invention;
Fig. 12A is a flow chart explaining the operation of a heating/hot water supply control section in the hot water storage type heater/water heater as an example of a hot water storage type heat source device in the ninth embodiment of the invention;
Fig. 12B is a flow chart explaining the operation of the heating/hot water supply control section; and
Fig. 13 is a flow chart explaining the operation of a heating/hot water supply control section in the hot water storage type heater/water heater as an example of a hot water storage type heat source device in a tenth embodiment of the invention.

### DESCRIPTION OF EMBODIMENTS

Hereinbelow, the hot water storage type heat source device in the present invention will be described in detail in conjunction with the embodiments with reference to the drawings.

### (First Embodiment)

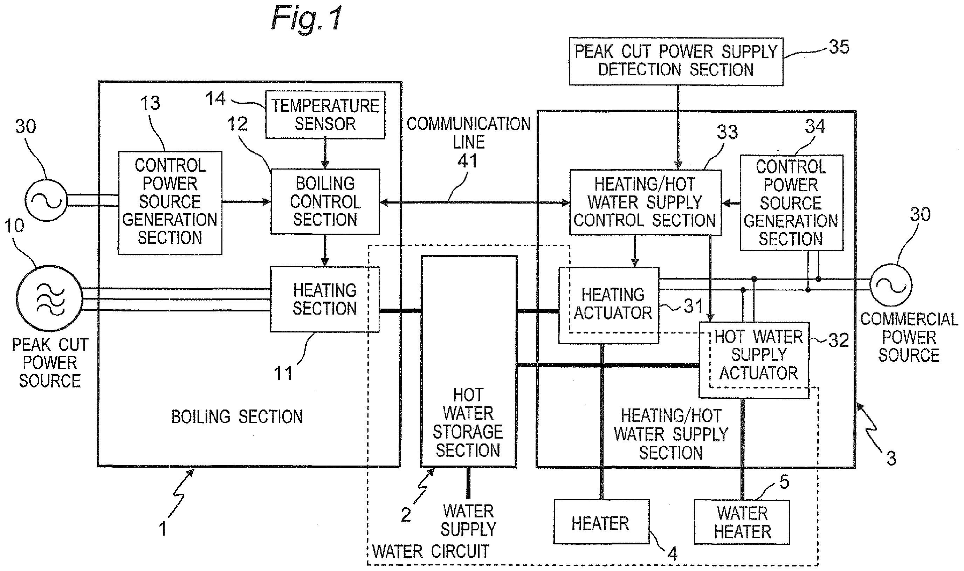

Fig. 1 is a block diagram of a hot water storage type heater/water heater as an example of a hot water storage type heat source device in the first embodiment of the invention. The hot water storage type heater/water heater is composed of, as shown in Fig. 1, a boiling section 1, a hot water storage section 2, and a heating/hot water supply section 3 as an example of the indoor-side utilization section which supplies hot water to a heater 4 and a water heater 5. In Fig. 1, a section encircled by a dotted line represents a water circuit.

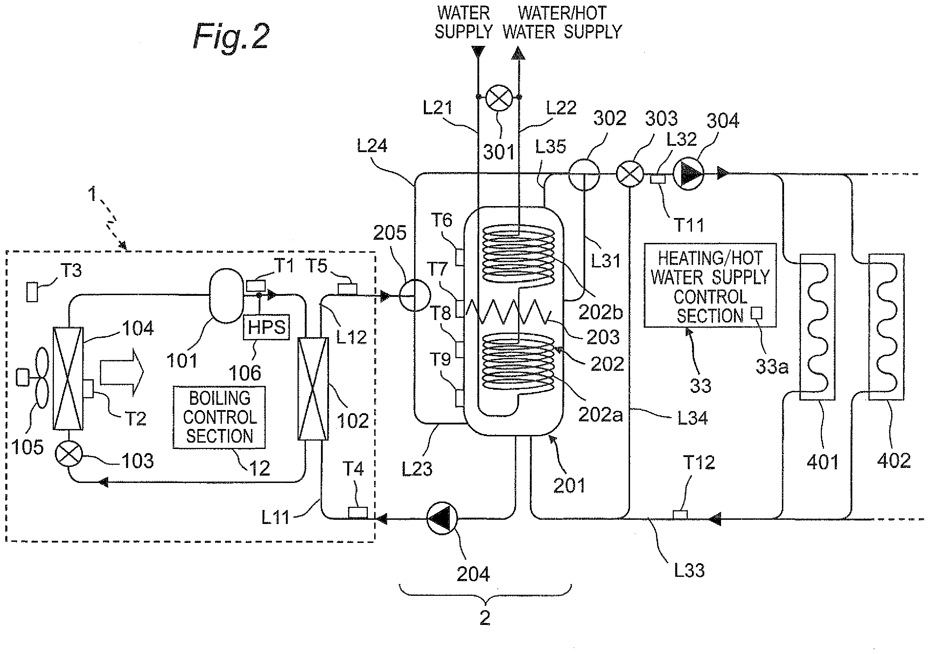

The boiling section 1 has a heating section 11 for receiving electric power supplied from a peak cut power source 10, a boiling control section 12 for controlling the heating section 11, a control power source generation section 13 as an example of the power source generation section for the boiling control section which receives single-phase AC voltage from a commercial power source 30 and generates power supply voltage for control to be fed to the boiling control section 12, and a temperature sensor 14 (T1 to T5 shown in Fig. 2) for detecting various kinds of temperature. The boiling control section 12 is composed of a microcomputer, an input/output circuit, and other components. The electric power supply from the peak cut power source 10 is stopped for the purpose of power load reduction and the like on account of a power supply side.

The heating/hot water supply section 3 is composed of a heating actuator 31 which receives electric power supplied from the commercial power source 30, a hot water supply actuator 32 which receives electric power supplied from the commercial power source 30, a heating/hot water supply control section 33 as an example of the indoor-side control section which controls the heating actuator 31 and the hot water supply actuator 32, a control power source generation section 34 which receives single-phase AC voltage from the commercial power source 30 and generates power supply voltage for control fed to the heating/hot water supply control section 33, and a communication failure detection section (not shown) which detects communication failure between the heating/hot water supply control section 33 and the boiling control section 12 (on the side of the boiling section 1). The commercial power source 30, which is different from the peak cut power source 10, normally keeps on supplying electric power to the heating/hot water supply section 3 even when electric power supply from the peak cut power source 10 is out of service. The heating/hot water supply control section 33, which is composed of a microcomputer, an input/output circuit and the like, has a priority setting section (not shown) which sets the priority between the heating operation and the hot water supply operation.

The communication failure detection section monitors signals of a communication line 41 connected to between the heating/hot water supply control section 33 and the boiling control section 12, and outputs a signal indicating communication failure to the heating/hot water supply control section 33 at the time of communication failure.

The hot water storage type heater/water heater is also composed of a peak cut power supply detection section 35 which detects the stop of electric power supply from the peak cut power source 10, and a display section (not shown) controlled by the heating/hot water supply control section 33. Although the display section is placed on the indoor side where the user can easily and visually inspect the display, it may be placed on the heating/hot water supply section 3 side.

Fig. 2 is a circuit diagram showing a specific configuration of the hot water storage type heater/water heater. As shown in Fig. 2, the boiling section 1 has a heat pump unit as an example of the heating section 11. The heat pump unit uses a CO₂ refrigerant which has a low global warming potential so as not to destroy ozone. Accordingly, the temperature of hot tap water by the heat pump unit can be made high (e.g., 90 °C).

The heat pump unit is composed of a compressor 101, a condenser 102 with one end (primary side) connected to the discharge side of the compressor 101, an expansion valve 103 with one end connected to the other end (primary side) of the condenser 102, an evaporator 104 with one end connected to the other end of the expansion valve 103 while the other end connected to the suction side of the compressor 101, and a blower fan 105 for feeding outside air to the evaporator 104. The compressor 101, the condenser 102, the expansion valve 103 and the evaporator 104 constitute a refrigerant circuit.

On the discharge side of the compressor 101, a discharge temperature sensor T1 for detecting discharge temperature is placed, and also a pressure sensor (HPS) 106 for detecting discharge pressure is placed. A vaporizer temperature sensor T2 for detecting the vaporizer temperature is placed in the evaporator 104, and an outside air temperature sensor T3 for detecting outside air temperature is placed in the vicinity of the evaporator 104. Based on detection signals of the discharge temperature sensor T1, the vaporizer temperature sensor T2, the outside air temperature sensor T3 and the pressure sensor (HPS) 106, the boiling control section 12 controls the compressor 101, the expansion valve 103, the blower fan 105 and the like.

A boiling outgoing connection port provided on the lower part of the hot water storage tank 201 is connected to one end of a pipe L11, while the other end of the pipe L11 is connected to one end (secondary side) of the condenser 102. The pipe L11 is equipped with a boiling circulating pump 204 which pumps up water from the lower part of the hot water storage tank 201 toward the condenser 102 side. The other end (secondary side) of the condenser 102 in the boiling section 1 is connected to one end of a pipe L12, while the other end of the pipe L12 is connected to the input side of a boiling thee way valve 205. One output side of the boiling thee way valve 205 is connected to one end of a pipe L24, while the other end of the pipe L24 is connected to one input side of a heating three way valve 302. Further, one input side of the heating three way valve 302 is connected to a second heating outgoing connection port (serving also as a boiling return connection port) provided on the upper part of the hot water storage tank 201 via a pipe L35. The other output side of the boiling thee way valve 205 is connected to one end of a pipe L23, while the other end of the pipe L23 is connected to the lower side of the hot water storage tank 201.

An incoming water temperature sensor T4 for detecting incoming water temperature is placed on the pipe L11 at a position upstream of the secondary side of the condenser 102, and a hot tap water temperature sensor T5 for detecting hot tap water temperature is placed on the pipe L12 at a position downstream of the secondary side of the condenser 102.

The hot water storage tank 201 has a generally cylindrical shape surrounded with a heat insulating material (not shown). A hot water supply heat exchanger 202 constituted of a coiled pipe is placed in the hot water storage tank 201. The hot water supply heat exchanger 202 has a lower coil section 202a and an upper coil section 202b which are connected at a predetermined interval. The lower end of a water supply pipe L21 which travels through the upper part of the hot water storage tank 201 is connected to the lower end of the lower coil section 202a, while the lower end of a hot water supply line L22 which travels through the upper part of the hot water storage tank 201 is connected to the upper end of the upper coil section 202b. The water supply line L21 and the hot water supply line L22 are connected outside the hot water storage tank 201 by a hot water supply mixing valve 301 as an example of the hot water supply actuator 32 (shown in Fig. 1) .

The water supplied from the outside via the water supply line L21 flows from the lower end side of the lower coil section 202a toward the upper end side of the upper coil section 202b, and is supplied to the water heater 5 (shown in Fig. 1) via the hot water supply line L22.

In the hot water storage tank 201, four temperature sensors T6 to T9 are placed in this order from the upper side to the lower side. The temperature sensor T6 detects the temperature of the water in the upper portion of the hot water storage tank 201, and the temperature sensor T7 detects the temperature of the water in the middle portion of the hot water storage tank 201. The temperature sensor T9 detects the temperature of the water in the vicinity of the lower portion of the hot water storage tank 201, and the temperature sensor T8 detects the temperature of the water in the hot water storage tank 201 at a position between the temperature sensor T7 and the temperature sensor T9.

An electrothermal heater 203 is placed between the lower coil section 202a and the upper coil section 202b in the hot water storage tank 201.

The hot water storage tank 201, the hot water supply heat exchanger 202, the electrothermal heater 203, the boiling circulating pump 204, the boiling three way valve 205 and the temperature sensors T6 to T9 constitute a hot water storage section 2 (shown in Fig. 1).

Next, the other input side of the heating three way valve 302 is connected to one end of a pipe L31, while the other end of the pipe L31 is connected to a first heating outgoing connection port in the hot water storage tank 201 (positioned in between the upper coil section 202b and the electrothermal heater 203). The output side of the heating three way valve 302 is connected to one input side of the heating mixing valve 303, while the output side of the heating mixing valve 303 is connected to one end of the pipe L32. The pipe L32 is equipped with a heating outgoing temperature sensor T11 and a heating circulating pump 304 placed in this order from the heating mixing valve 303 side. One ends of radiators 401, 402... are respectively connected to the portion of the pipe L32 downstream from the heating circulating pump 304. A heating return connection port provided in the lower part of the hot water storage tank 201 is connected to one end of a pipe L33, while the other end side of the pipe L33 is connected to the other ends of the radiators 401, 402..., respectively. The pipe L33 is equipped with a heating return temperature sensor T12. A portion of the pipe L33 closer to the hot water storage tank 201 than the heating return temperature sensor T12 and the other input side of the heating mixing valve 303 are connected by a pipe L34.

The heating/hot water supply control section 33 controls the boiling three way valve 205, the heating three way valve 302, the boiling circulating pump 204, and the heating circulating pump 304 based on the detection signals from the temperature sensors T6 to T9, the heating outgoing temperature sensor T11, and the heating return temperature sensor T12.

The heating outgoing temperature sensor T11, the heating return temperature sensor T12, the hot water supply mixing valve 301, the heating three way valve 302, the heating circulating pump 304, and the heating/hot water supply control section 33 are included in the heating/hot water supply section 3 (shown in Fig. 1) driven by the commercial power source 30.

In the hot water storage type heater/water heater with the above configuration, water is supplied through a water supply port (not shown) in the lower part of the hot water storage tank 201 and is stored in the hot water storage tank 201 while electric power is supplied from both the peak cut power source 10 and the commercial power source 30. Next, the output side of the boiling three way valve 205 in the hot water storage section 2 is switched to the pipe L24 side, and the compressor 101 in the boiling section 1 is driven, while operation of the blower fan 105 is started. Further, the boiling circulating pump 204 in the hot water storage section 2 is driven. Consequently, a high-pressure gas refrigerant discharged from the compressor 101 radiates heat and condenses into a liquid refrigerant in the condenser 102, and then the low pressure refrigerant decompressed by the expansion valve 103 absorbs heat from outside air and evaporates in the evaporator 104. Then, the low pressure gas refrigerant evaporated in the evaporator 104 returns to the suction side of the compressor 101. In this case, the water flowing from the lower part of the hot water storage tank 201 into the secondary side of the condenser 102 via the pipe L11 by the boiling circulating pump 204 is heated by the condenser 102 to be hot water with temperature of near 90 °C, and returns to the hot water storage tank 201 via the pipe L12, the boiling three way valve 205, the pipe L24 and the pipe L35. In this way, the water in the hot water storage tank 201 is circulated via the boiling circulating pump 204 and the condenser 102 so that the water in the hot water storage tank 201 is boiled.

Next, in the case of performing heating operation, the heating three way valve 302 in the heating/hot water supply section 3 is switched so that the pipe L31 side and the heating mixing valve 303 side are connected, and the heating circulating pump 304 is driven. Consequently, the hot water in the middle portion of the hot water storage tank 201 flows into the radiators 401, 402... via the pipe L31, the heating three way valve 302, the heating mixing valve 303, and the heating circulating pump 304, respectively. The return hot water coming from the radiators 401, 402... returns to the hot water storage tank 201 through the lower part of the hot water storage tank 201 via the pipe L33.

In this case, the heating/hot water supply control section 33 controls the heating three way valve 302, the heating mixing valve 303, and the heating circulating pump 304 based on the heating outgoing temperature detected by the heating outgoing temperature sensor T11 and the heating return temperature detected by the heating return temperature sensor T12. The boiling and the heating operation by the heat pump unit may be performed simultaneously.

Next, in the case of performing hot water supply operation, upon opening of a hot water supply faucet of the water heater 5, the water supplied from the outside by water supply pressure flows into the water heater 5 via the water supply line L21, the hot water supply heat exchanger 202 and the hot water supply line L22, and the hot water heated by the hot water supply heat exchanger 202 is supplied to the water heater 5. In this case, the heating/hot water supply control section 33 controls the hot water supply mixing valve 301 to adjust the temperature of the hot water supplied to the water heater 5 to desired temperature. It is to be noted that at least either the heating operation or the boiling operation by the heat pump unit may be performed in concurrence with the hot water supply operation.

In the hot water storage type heater/water heater, when the peak cut power supply detection section 35 detects the stop of electric power supply from the peak cut power source 10, the heating/hot water supply control section 33 determines that the boiling section 1 is in a stopped state and continues operation of the heating/hot water supply section 3. Consequently, the supply interruption of the peak cut power source 10 is reliably detected, and the operation mode is shifted to the mode executed by only the heating/hot water supply section 3.

Moreover, when the boiling section 1 is stopped due to the stop of electric power supply from the peak cut power source 10 and so the heating/hot water supply control section 33 operates with electric power from the commercial power source 30, either the indoor-side heating or the indoor-side hot water supply is performed in preference to either one of the operations based on the priority set by the priority setting section, so that it becomes possible to preferentially perform the operation desired by the user, and to thereby enhance user-friendliness.

According to the hot water storage type heater/water heater with the above configuration, even when the electric power supply from the peak cut power source 10 is stopped on account of the power supply side, the heating operation and the hot water supply operation can be continued by using the hot water stored in the hot water storage section 2 as a heat source with a simple configuration.

Moreover, supply voltage for the boiling control section 12 is generated by the control power source generation section 13 which receives electric power supplied from the commercial power source 30, and the supply voltage from the control power source generation section 13 is fed to the boiling control section 12 placed in the boiling section 1, so that even when the electric power supply from the peak cut power source 10 is stopped, the boiling control section 12 and the heating/hot water supply section 3 can operate without suffering power off.

Although the temperature sensors T1 to T9, T11 and T12 in the first embodiment were constituted of thermistors, other elements such as thermocouples may be used instead.

Although the peak cut power source was a three-phase AC power source and the commercial power source was a single-phase AC power source in the first embodiment, the peak cut power source may be a single-phase AC power source, and the commercial power source may be a three-phase AC power source.

Since the boiling section 1 is often placed outside the residential space such as outdoor space, the temperature such as outside air temperature and incoming water temperature is detected, and if the temperature is lower than prescribed temperature, the boiling circulating pump 204 is driven to prevent the circulating route from freezing. In this case, in order to prevent the hot water in the hot water storage tank 201 from being cooled by the low outside air temperature as much as possible, there are effective methods such as a method for driving the boiling circulating pump 204 at predetermined intervals to the extent of preventing freezing so as to intermittently circulate water and a method for continuously circulating water at a small flow rate. These methods can also minimize power consumption resulting from pump drive.

In the first embodiment, although the boiling circulating pump 204 is formed in the hot water storage section 2, the boiling circulating pump 204 may be provided in the boiling section and controlled by the boiling control section, so that the antifreeze operation can be controlled independently by the boiling control section regardless of the operation state of the indoor-side utilization section. As described above, the antifreeze operation is controlled with use of the information including outside air temperature and incoming water temperature detected by the boiling control section, and therefore autonomous and independent execution of the antifreeze operation by the boiling control section makes it possible to perform the antifreeze operation in the case where, for example, the indoor-side utilization section, the heating/hot water supply control section, the communication circuit and the like are out of order.

### (Second Embodiment)

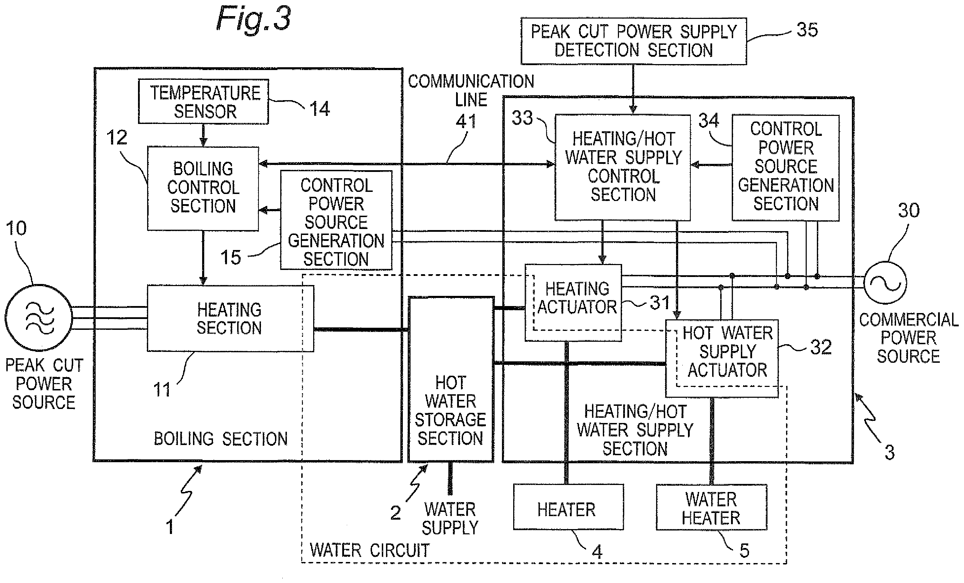

Fig. 3 is a block diagram of a hot water storage type heater/water heater as an example of a hot water storage type heat source device in the second embodiment of the invention. The hot water storage type heater/water heater of the second embodiment has the same configuration as the hot water storage type heater/water heater of the first embodiment except for the control power source generation section. Like component sections are denoted by like reference signs, and description thereof will be omitted.

The hot water storage type heater/water heater of the second embodiment has, as shown in Fig. 3, a control power source generation section 15 as an example of the power source generation section for the boiling control section in the boiling section 1. The control power source generation section 15 receives electric power supplied from the commercial power source 30 via the heating/hot water supply section 3.

In the hot water storage type heater/water heater with the above configuration, as is the case with the first embodiment, the heating operation and the hot water supply operation can be continued by using the hot water stored in the hot water storage section 2 as a heat source with a simple configuration even when the electric power supply from the peak cut power source 10 is stopped on account of the power supply side.

Moreover, electric power from the commercial power source 30 is supplied to the control power source generation section 15 via the heating/hot water supply section 3, so that a part of a source line and a communication line 41 between the boiling section 1 and the heating/hot water supply section 3 can be shared, so that the number of interconnections can be reduced.

### (Third Embodiment)

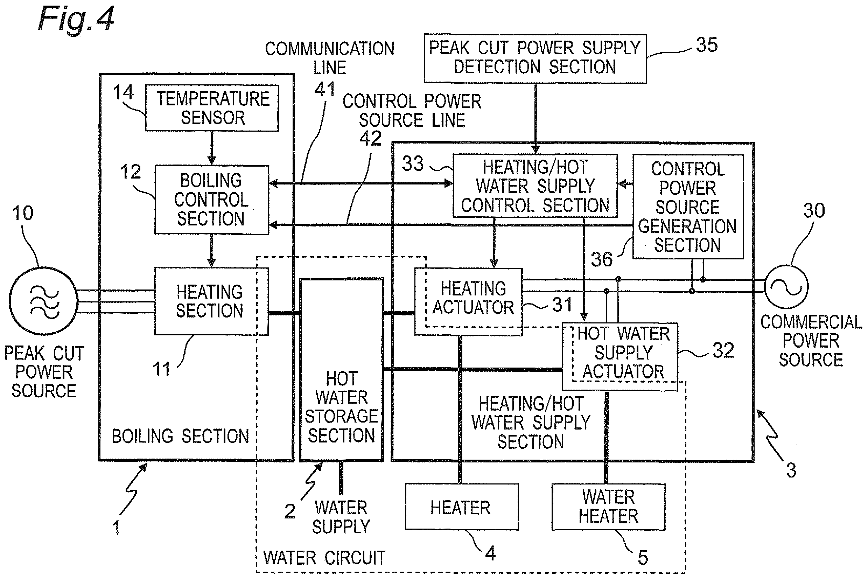

Fig. 4 is a block diagram of a hot water storage type heater/water heater as an example of a hot water storage type heat source device in the third embodiment of the invention. The hot water storage type heater/water heater of the third embodiment has the same configuration as the hot water storage type heater/water heater of the first embodiment except for the control power source generation section. Like component sections are denoted by like reference signs, and description thereof will be omitted.

In the hot water storage type heater/water heater of the third embodiment, as shown in Fig. 4, power supply voltage for control from a control power source generation section 36 in the heating/hot water supply section 3 is supplied to the boiling control section 12 in the boiling section 1 via a control power source line 42.

In the hot water storage type heater/water heater with the above configuration, as is the case with the first embodiment, the heating operation and the hot water supply operation can be continued by using the hot water stored in the hot water storage section 2 as a heat source with a simple configuration even when the electric power supply from the peak cut power source 10 is stopped on account of the power supply side.

The power supply voltage for control for both the heating/hot water supply section 3 and the boiling control section 12 is collectively generated by the control power source generation section 36 on the side of the heating/hot water supply section 3, so that a power supply circuit can be shared and costs can be reduced. Moreover, a part of the control power source line 42 and the communication line 41 between the boiling section 1 and the heating/hot water supply section 3 can be shared, so that the number of interconnections can be reduced.

### (Fourth Embodiment)

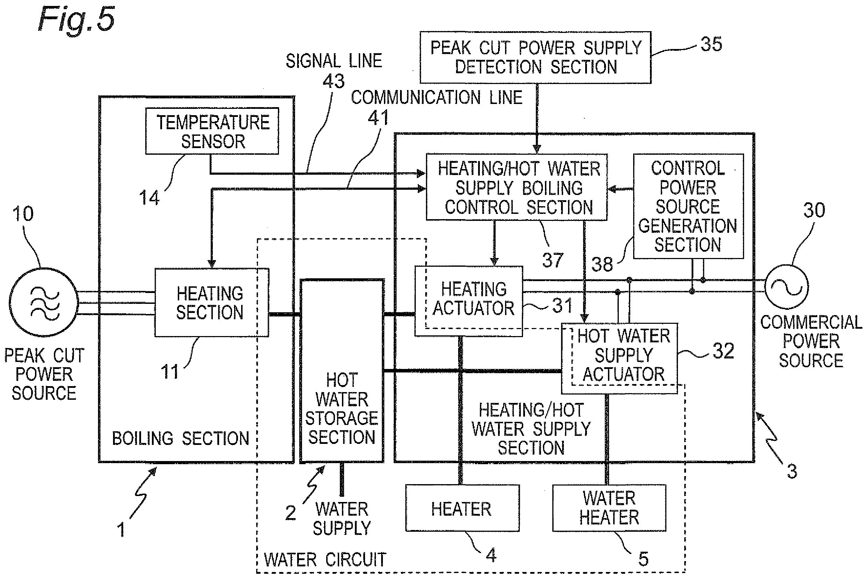

Fig. 5 is a block diagram of a hot water storage type heater/water heater as an example of a hot water storage type heat source device in the fourth embodiment of the invention. The hot water storage type heater/water heater of the fourth embodiment has the same configuration as the hot water storage type heater/water heater of the first embodiment except for the control section and the control power source generation section. Like component sections are denoted by like reference signs, and description thereof will be omitted.

The hot water storage type heater/water heater of the fourth embodiment has, as shown in Fig. 5, a heating/hot water supply boiling control section 37 as an example of the boiling control section in the heating/hot water supply section 3. The heating/hot water supply boiling control section 37 receives inputs of signals from the temperature sensor 14 of the boiling section 1 via a signal line 43. The heating/hot water supply boiling control section 37 controls the heating actuator 31 and the hot water supply actuator 32 in the heating/hot water supply section 3, and controls the heating section 11 in the boiling section 1 via the communication line 41 based on a signal from the temperature sensor 14 in the boiling section 1.

In the hot water storage type heater/water heater with the above configuration, as is the case with the first embodiment, the heating operation and the hot water supply operation can be continued by using the hot water stored in the hot water storage section 2 as a heat source with a simple configuration even when the electric power supply from the peak cut power source 10 is stopped on account of the power supply side.

The heating/hot water supply boiling control section 37, which controls the heating/hot water supply section 3 and the heating section 11 in the boiling section 1, is placed on the side of the heating/hot water supply section 3, so that one control power source generation section 38 can operate control functions of both the boiling section 1 and the heating/hot water supply section 3, which allows a power supply circuit to be shared and costs to be reduced.

### (Fifth Embodiment)

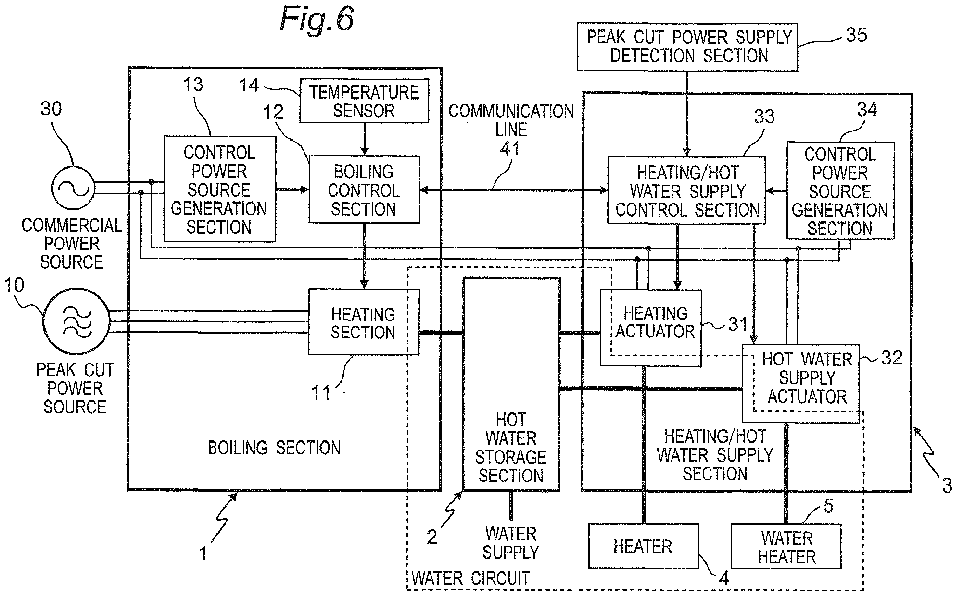

Fig. 6 is a block diagram of a hot water storage type heater/water heater as an example of a hot water storage type heat source device in the fifth embodiment of the invention. The hot water storage type heater/water heater of the fifth embodiment has the same configuration as the hot water storage type heater/water heater of the first embodiment except for connection to the commercial power source. Like component sections are denoted by like reference signs, and description thereof will be omitted.

Although the boiling section 1 side and the heating/hot water supply section 3 side are respectively connected to the commercial power source 30 in the hot water storage type heater/water heater of the first embodiment, the hot water storage type heat source device of the fifth embodiment is different from the first embodiment in the point that the boiling section 1 side is connected to the commercial power source 30, and that the electric power from the commercial power source 30 is supplied to the control power source generation section 34, the heating actuator 31 and the hot water supply actuator 32 in the heating/hot water supply section 3 via the boiling section 1.

The hot water storage type heater/water heater of the fifth embodiment has the same effect as the hot water storage type heater/water heater of the first embodiment.

### (Sixth Embodiment)

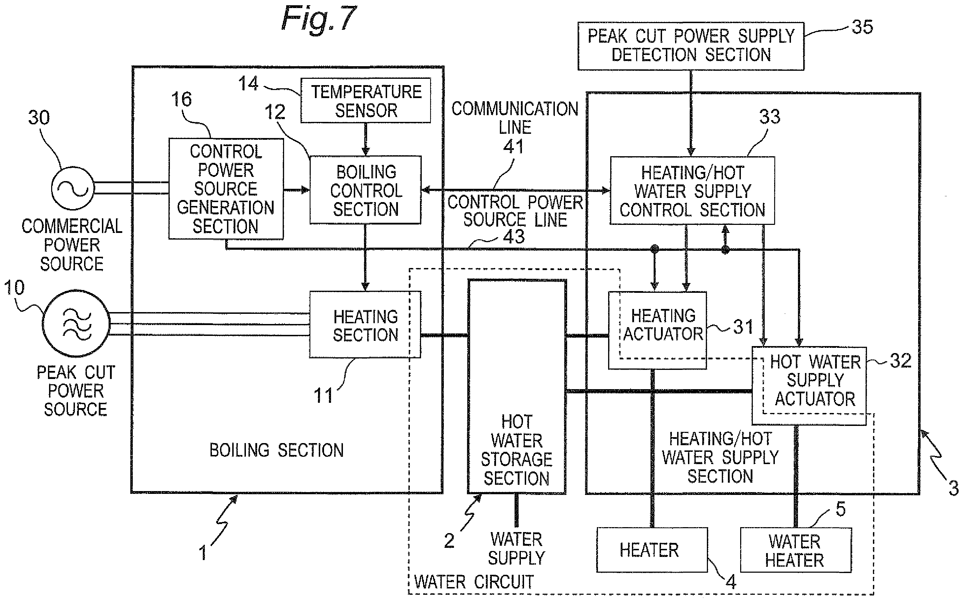

Fig. 7 is a block diagram of a hot water storage type heater/water heater as an example of a hot water storage type heat source device in the sixth embodiment of the invention. The hot water storage type heater/water heater of the sixth embodiment has the same configuration as the hot water storage type heater/water heater of the fifth embodiment except for connection to the commercial power source and to the control power source as well as the control power source generation section. Like component sections are denoted by like reference signs, and description thereof will be omitted.

Although the boiling section 1 side is connected to the commercial power source 30, and the electric power from the commercial power source 30 is supplied to the control power source generation section 34, the heating actuator 31 and the hot water supply actuator 32 in the heating/hot water supply section 3 via the boiling section 1 in the hot water storage type heat source device of the fifth embodiment, the hot water storage type heat source device of this sixth embodiment is different from the fifth embodiment in the point that power supply voltage for control from the control power source generation section 16 in the boiling section 1 is supplied to the heating/hot water supply control section 33, the heating actuator 31 and the hot water supply actuator 32 in the heating/hot water supply section 3 via a control power source line 43. That is, in the hot water storage type heat source device of the sixth embodiment, the single-phase AC voltage from the commercial power source 30 is not directly supplied to the heating/hot water supply section 3.

The hot water storage type heater/water heater of the sixth embodiment has the same effect as the hot water storage type heater/water heater of the first embodiment.

Although description has been given of the hot water storage type heater/water heater as a hot water storage type heat source device in the first to sixth embodiments, the hot water storage type heat source device of the invention may be applied to hot water storage type heaters or water heaters.

### (Eighth Embodiment)

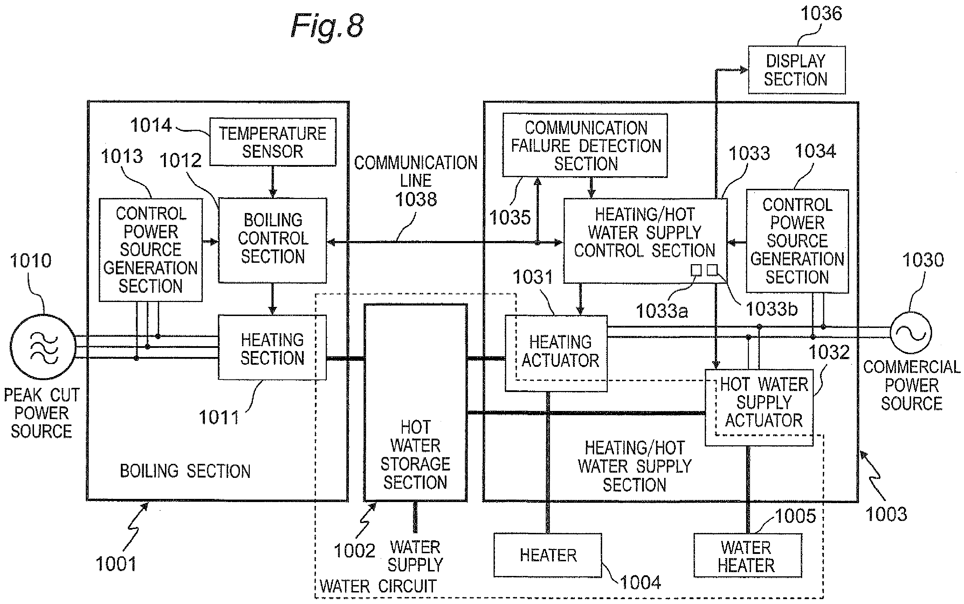

Fig. 8 is a block diagram of a hot water storage type heater/water heater as an example of a hot water storage type heat source device in the eighth embodiment of the invention. The hot water storage type heater/water heater is composed of, as shown in Fig. 8, a boiling section 1001, a hot water storage section 1002, and a heating/hot water supply section 1003 as an example of the indoor-side utilization section which supplies hot water to a heater 1004 and a water heater 1005. In Fig. 8, a section encircled by a dotted line represents a water circuit.

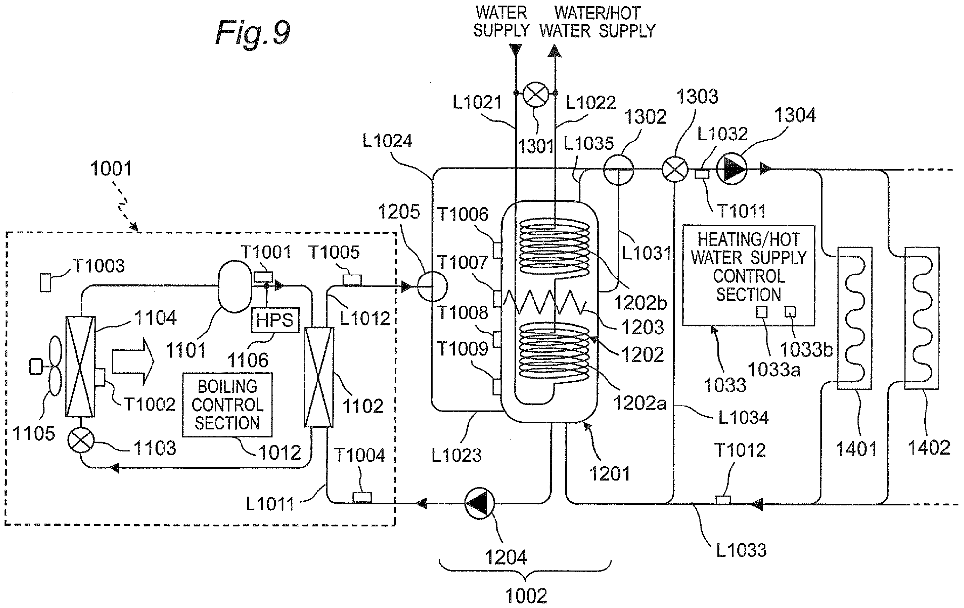

The boiling section 1001 is composed of a heating section 1011 for receiving electric power supplied from a peak cut power source 1010, a boiling control section 1012 for controlling the heating section 1011, a control power source generation section 1013 which receives three-phase AC voltage from the peak cut power source 1010 and generates power supply voltage for control fed to the boiling control section 1012, and a temperature sensor 1014 (T1001 to T1005 shown in Fig. 9) for detecting various kinds of temperature. The boiling control section 1012 is composed of a microcomputer, an input/output circuit, and other components. The electric power supply from the peak cut power source 1010 is stopped for the purpose of power load reduction and the like on account of a power supply side.

The heating/hot water supply section 1003 is composed of a heating actuator 1031 which receives electric power supplied from a commercial power source 1030, a hot water supply actuator 1032 which receives electric power supplied from the commercial power source 1030, a heating/hot water supply control section 1033 as an example of the indoor-side control section which controls the heating actuator 1031 and the hot water supply actuator 1032, a control power source generation section 1034 which receives single-phase AC voltage from the commercial power source 1030 and generates power supply voltage for control fed to the heating/hot water supply control section 1033, and a communication failure detection section 1035 which detects communication failure between the heating/hot water supply control section 1033 and the boiling control section 1012 (on the side of the boiling section 1001). The commercial power source 1030, which is different from the peak cut power source 1010, normally keeps on supplying electric power to the heating/hot water supply section 1003 even when electric power supply from the peak cut power source 1010 is out of service. The heating/hot water supply control section 1033, which is composed of a microcomputer, an input/output circuit, and other components, has a priority setting section 1033a for setting the priority between the heating operation and the hot water supply operation, and an electrothermal heater setting section 1033b which sets whether or not heating by the electrothermal heater 1203 (shown in Fig. 9) is performed when the electric power supply from the peak cut power source 1010 is stopped.

The communication failure detection section 1035 monitors signals of a communication line 1038 connected to between the heating/hot water supply control section 1033 and the boiling control section 1012, and outputs a signal indicating communication failure to the heating/hot water supply control section 1033 at the time of communication failure.

The hot water storage type heater/water heater has a display section 1036 as an example of the communication failure display section and the peak cut power source status display section controlled by the heating/hot water supply control section 1033. Although the display section 1036 is placed on the indoor side where a user can easily and visually inspect the display, it may be placed on the heating/hot water supply section 1003 side.

Fig. 9 is a circuit diagram showing a specific configuration of the hot water storage type heater/water heater. As shown in Fig. 9, the boiling section 1001 has a heat pump unit as an example of the heating section 1011. The heat pump unit uses a CO₂ refrigerant which has a low global warming potential so as not to destroy ozone. Accordingly, the temperature of hot tap water by the heat pump unit can be made high (e.g., 90 °C).

The heat pump unit is composed of a compressor 1101, a condenser 1102 with one end (primary side) connected to the discharge side of the compressor 1101, an expansion valve 1103 with one end connected to the other end (primary side) of the condenser 1102, an evaporator 1104 with one end connected to the other end of the expansion valve 1103 while the other end connected to the suction side of the compressor 1101, and a blower fan 1105 for feeding outside air to the evaporator 1104. The compressor 1101, the condenser 1102, the expansion valve 1103 and the evaporator 1104 constitute a refrigerant circuit.

On the discharge side of the compressor 1101, a discharge temperature sensor T1001 for detecting discharge temperature is placed, and also a pressure sensor (HPS) 1106 for detecting discharge pressure is placed. A vaporizer temperature sensor T1002 for detecting the vaporizer temperature is placed in the evaporator 1104, and an outside air temperature sensor T1003 for detecting outside air temperature is placed in the vicinity of the evaporator 1104. Based on detection signals of the discharge temperature sensor T1001, the vaporizer temperature sensor T1002, the outside air temperature sensor T1003 and the pressure sensor (HPS) 1106, the boiling control section 1012 controls the compressor 1101, the expansion valve 1103, the blower fan 1105 and the like.

A boiling outgoing connection port provided on the lower part of the hot water storage tank 1201 is connected to one end of a pipe L1011, while the other end of the pipe L1011 is connected to one end (secondary side) of the condenser 1102. The pipe L1011 is equipped with a boiling circulating pump 1204 which pumps up water from the lower part of the hot water storage tank 1201 toward the condenser 1102 side. The other end (secondary side) of the condenser 1102 in the boiling section 1001 is connected to one end of a pipe L1012, while the other end of the pipe L1012 is connected to the input side of a boiling thee way valve 1205. One output side of the boiling thee way valve 1205 is connected to one end of a pipe L1024, while the other end of the pipe L1024 is connected to one input side of a heating three way valve 1302. Further, one input side of the heating three way valve 1302 is connected to a second heating outgoing connection port (serving also as a boiling return connection port) provided on the upper part of the hot water storage tank 1201 via a pipe L1035. The other output side of the boiling thee way valve 1205 is connected to one end of a pipe L1023, while the other end of the pipe L1023 is connected to the lower side of the hot water storage tank 1201.

An incoming water temperature sensor T1004 for detecting incoming water temperature is placed on the pipe L1011 at a position upstream of the secondary side of the condenser 1102, and a hot tap water temperature sensor T105 for detecting hot tap water temperature is placed on the pipe L1012 at a position downstream of the secondary side of the condenser 1102.

The hot water storage tank 1201 has a generally cylindrical shape surrounded with a heat insulating material (not shown). A hot water supply heat exchanger 1202 constituted of a coiled pipe is placed in the hot water storage tank 1201. The hot water supply heat exchanger 1202 has a lower coil section 1202a and an upper coil section 1202b which are connected at a predetermined interval. The lower end of a water supply pipe L1021 which travels through the upper part of the hot water storage tank 1201 is connected to the lower end of the lower coil section 1202a, while the lower end of a hot water supply line L1022 which travels through the upper part of the hot water storage tank 1201 is connected to the upper end of the upper coil section 1202b. The water supply line L1021 and the hot water supply line L1022 are connected outside the hot water storage tank 1201 by a hot water supply mixing valve 1301 as an example of the hot water supply actuator 1032 (shown in Fig. 8).

The water supplied from the outside via the water supply line L1021 flows from the lower end side of the lower coil section 1202a toward the upper end side of the upper coil section 1202b, and is supplied to the water heater 1005 (shown in Fig. 8) via the hot water supply line L1022.

In the hot water storage tank 1201, four temperature sensors T1006 to T1009 are placed in this order from the upper side to the lower side. The temperature sensor T1006 detects the temperature of the water in the upper portion of the hot water storage tank 1201, and the temperature sensor T1007 detects the temperature of the water in the middle portion of the hot water storage tank 1201. The temperature sensor T1009 detects the temperature of the water in the vicinity of the lower portion of the hot water storage tank 1201, and the temperature sensor T1008 detects the temperature of the water in the hot water storage tank 1201 at a position between the temperature sensor T1007 and the temperature sensor T1009.

An electrothermal heater 1203 is placed between the lower coil section 1202a and the upper coil section 1202b in the hot water storage tank 1201.

The hot water storage tank 1201, the hot water supply heat exchanger 1202, the electrothermal heater 1203, the boiling circulating pump 1204, the boiling three way valve 1205 and the temperature sensors T1006 to T1009 constitute a hot water storage section 1002 (shown in Fig. 8).

Next, the other input side of the heating three way valve 1302 is connected to one end of a pipe L1031, while the other end of the pipe L1031 is connected to a first heating outgoing connection port in the hot water storage tank 1201 (positioned in between the upper coil section 1202b and the electrothermal heater 1203). The output side of the heating three way valve 1302 is connected to one input side of the heating mixing valve 1303, while the output side of the heating mixing valve 1303 is connected to one end of the pipe L1032. The pipe L1032 is equipped with a heating outgoing temperature sensor T1011 and a heating circulating pump 1304 placed in this order from the heating mixing valve 303 side. One ends of radiators 1401, 1402... are respectively connected to the portion of the pipe L1032 downstream from the heating circulating pump 1304. A heating return connection port provided in the lower part of the hot water storage tank 1201 is connected to one end of a pipe L1033, while the other end side of the pipe L1033 is connected to the other ends of the radiators 1401, 1402..., respectively. The pipe L1033 is equipped with a heating return temperature sensor T1012. A portion of the pipe L1033 closer to the hot water storage tank 1201 than the heating return temperature sensor T1012 and the other input side of the heating mixing valve 1303 are connected by a pipe L1034.

The heating/hot water supply control section 1033 controls the boiling three way valve 1205, the heating three way valve 1302, the boiling circulating pump 1204, and the heating circulating pump 1304 based on the detection signals from the temperature sensors T1006 to T1009, the heating outgoing temperature sensor T1011, and the heating return temperature sensor T1012.

The heating outgoing temperature sensor T1011, the heating return temperature sensor T1012, the hot water supply mixing valve 1301, the heating three way valve 1302, the heating circulating pump 1304, and the heating/hot water supply control section 1033 are included in the heating/hot water supply section 1003 (shown in Fig. 8) driven by the commercial power source 1030.

In the hot water storage type heater/water heater with the above configuration, water is supplied through a water supply port (not shown) in the lower part of the hot water storage tank 1201 and is stored in the hot water storage tank 1201 while electric power is supplied from both the peak cut power source 1010 and the commercial power source 1030. Next, the output side of the boiling three way valve 1205 in the hot water storage section 1002 is switched to the pipe L1024 side, and the compressor 1101 in the boiling section 1001 is driven, while operation of the blower fan 1105 is started. Further, the boiling circulating pump 1204 in the hot water storage section 1002 is driven. Consequently, a high-pressure gas refrigerant discharged from the compressor 1101 radiates heat and condenses into a liquid refrigerant in the condenser 1102, and then the low pressure refrigerant decompressed by the expansion valve 1103 absorbs heat from outside air and evaporates in the evaporator 1104. Then, the low pressure gas refrigerant evaporated in the evaporator 1104 returns to the suction side of the compressor 1101. In this case, the water flowing from the lower part of the hot water storage tank 1201 into the secondary side of the condenser 1102 via the pipe L1011 by the boiling circulating pump 1204 is heated by the condenser 1102 to be hot water with temperature of near 90 °C, and returns to the hot water storage tank 1201 via the pipe L1012, the boiling three way valve 1205, the pipe L1024 and the pipe L1035. In this way, the water in the hot water storage tank 1201 is circulated via the boiling circulating pump 1204 and the condenser 1102 so that the water in the hot water storage tank 1201 is boiled.

Next, in the case of performing heating operation, the heating three way valve 1302 in the heating/hot water supply section 1003 is switched so that the pipe L1031 side and the heating mixing valve 1303 side are connected, and the heating circulating pump 1304 is driven. Consequently, the hot water in the middle portion of the hot water storage tank 1201 flows into the radiators 1401, 1402... via the pipe L1031, the heating three way valve 1302, the heating mixing valve 1303, and the heating circulating pump 1304, respectively. The return hot water coming from the radiators 1401, 1402... returns to the hot water storage tank 1201 through the lower part of the hot water storage tank 1201 via the pipe L1033.

In this case, the heating/hot water supply control section 1033 controls the heating three way valve 1302, the heating mixing valve 1303, and the heating circulating pump 1304 based on the heating outgoing temperature detected by the heating outgoing temperature sensor T1011 and the heating return temperature detected by the heating return temperature sensor T1012. The boiling and the heating operation by the heat pump unit may be performed simultaneously.

Next, in the case of performing hot water supply operation, upon opening of a hot water supply faucet of the water heater 1005, the water supplied from the outside by water supply pressure flows into the water heater 1005 via the water supply line L1021, the hot water supply heat exchanger 1202 and the hot water supply line L1022, and the hot water heated by the hot water supply heat exchanger 1202 is supplied to the water heater 1005. In this case, the heating/hot water supply control section 1033 controls the hot water supply mixing valve 1301 to adjust the temperature of the hot water supplied to the water heater 1005 to desired temperature. It is to be noted that at least either the heating operation or the boiling operation by the heat pump unit may be performed in concurrence with the hot water supply operation.

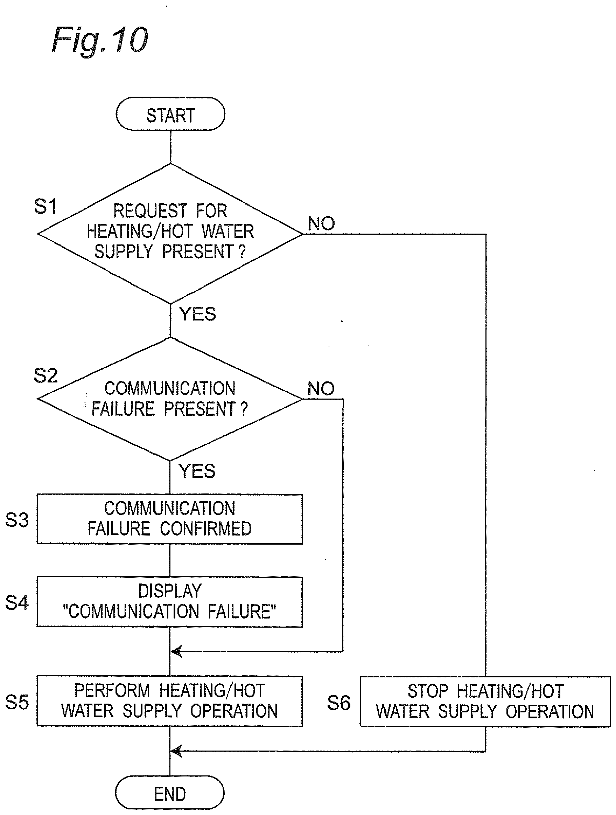

Description is now given of the operation of the heating/hot water supply control section 1033 according to the flow chart shown in Fig. 10.

First, upon start of processing, it is determined in Step S1 whether or not a request for heating/hot water supply is present, and if a request for heating/hot water supply is present, then the procedure proceeds to Step S2. In this case, the "request for heating/hot water supply" may refers to a request for either one of the heating operation and the hot water supply operation, or may be refer to a request for both the heating operation and the hot water supply operation.

Next, it is determined in Step S2 whether or not there is communication failure based on a signal from the communication failure detection section 1035. If it is determined in Step S2 that there is communication failure, then the procedure proceeds to Step S3, whereas if it is determined that there is no communication failure, then the procedure skips Step S3 and S4 and proceeds to Step S5.

Next, after the communication failure is confirmed in Step S3, the procedure proceeds to Step S4, where "communication failure" is displayed on the display section 1036. In this case, the display of "communication failure" is not limited to character representation but may be achieved by symbols and hieroglyphic symbols which can notify occurrence of communication failure.

Next, the procedure proceeds to Step S5, where heating/hot water supply operation is performed, and the processing is ended.

If there is no request for heating/hot water supply in Step S1, then the procedure proceeds to Step S6, where heating/hot water supply operation is stopped, and the processing is ended. In this case, "performing the heating/hot water supply operation" may refer to performing either one of the requested heating operation and the hot water supply operation or performing both the operations.

Thus, according to the hot water storage type heater/water heater with the above configuration, even when the electric power supply from the peak cut power source 1010 is stopped on account of the power supply side, the heating operation and the hot water supply operation can be continued by using the hot water stored in the hot water storage tank 1201 as a heat source with a simple configuration.

Moreover, the heating/hot water supply section 1003 has the heating actuator 1031 so that the heating operation with use of the heat source in the hot water storage tank 1201 can be controlled easily, and also the heating/hot water supply section 1003 has the hot water supply actuator 1032 so that the hot water supply operation with use of the heat source in the hot water storage tank 1201 can be controlled easily.

An efficient heat pump unit is used for the heating section 1011 in the boiling section 1001, so that power consumption can be reduced.

Moreover, the electrothermal heater 1203 used together with the heat pump unit is used as auxiliary equipment in the heating section 1011 of the boiling section 1001, so that it becomes possible to enhance heating capability and to increase the boiling temperature by the heating section 1011 in the case where capability of the heat pump unit cannot fully be demonstrated due to low outdoor temperature.

Moreover, the electrothermal heater 1203 is provided separately from the heating section 1011 of the boiling section 1001, and the electrothermal heater 1203 is driven with commercial power source 1030 to heat water, so that even when the electric power supply from the peak cut power source 1010 is stopped on account of the power supply side, heating operation and hot water supply operation can be continued for a long time. Although the electrothermal heater 1203 was placed in the hot water storage tank 1201 in the eighth embodiment, the electrothermal heater 1203 may be placed on the boiling section 1001 side.

When the electric power supply from the peak cut power source 1010 is stopped, heating control on the electrothermal heater 1203 is performed based on the setting of the electrothermal heater setting section 1033b, so that the user are provided with increased number of choices and enhanced usability.

Moreover, detection of communication failure between the boiling control section 1012 and the heating/hot water supply control section 1033 by the communication failure detection section 1035 is used for detecting the stop of the electric power supply from the peak cut power source 1010, so that it is not necessary to separately provide a means to detect supply interruption of the peak cut power source 1010, and thereby costs can be reduced.

Moreover, when the boiling section 1001 is stopped due to the stop of the electric power supply from the peak cut power source 1010 and so the heating/hot water supply control section 1033 operates with electric power from the commercial power source 1030, either the indoor-side heating or the indoor-side hot water supply is performed in preference to either one of the operations based on the priority set by the priority setting section 1033a, so that it becomes possible to preferentially perform the operation desired by the user, and to thereby enhance user-friendliness.

Although the heat pump unit was used for the heating section 1011 of the boiling section 1001 in the eighth embodiment, an electrothermal heater may be used for the heating section of the boiling section. In this case, the supplied power to the electrothermal heater allows accurate control on the heating capability.

Although the temperature sensors T1001 to T1009, T1011 and T1012 in the eighth embodiment were constituted of thermistors, other elements such as thermocouples may be used instead.

Although the peak cut power source was a three-phase AC power source and the commercial power source was a single-phase AC power source in the eighth embodiment, the peak cut power source may be a single-phase AC power source, and the commercial power source may be a three-phase AC power source.

### (Ninth Embodiment)

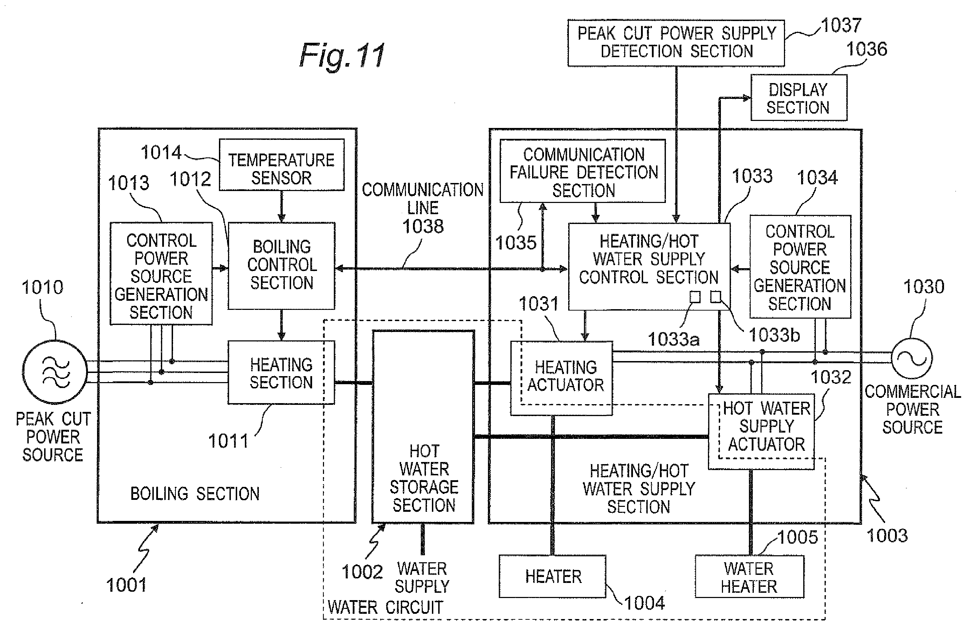

Fig. 11 is a block diagram of a hot water storage type heater/water heater as an example of a hot water storage type heat source device in the ninth embodiment of the invention. The hot water storage type heater/water heater of the ninth embodiment has the same configuration as the hot water storage type heater/water heater of the eighth embodiment except for the operation of the peak cut power supply detection section and the heating/hot water supply control section. Like component sections are denoted by like reference signs, and description thereof will be omitted.

The hot water storage type heater/water heater of the ninth embodiment has, as shown in Fig. 11, a peak cut power supply detection section 1037 for detecting the stop of electric power supply from the peak cut power source 1010.

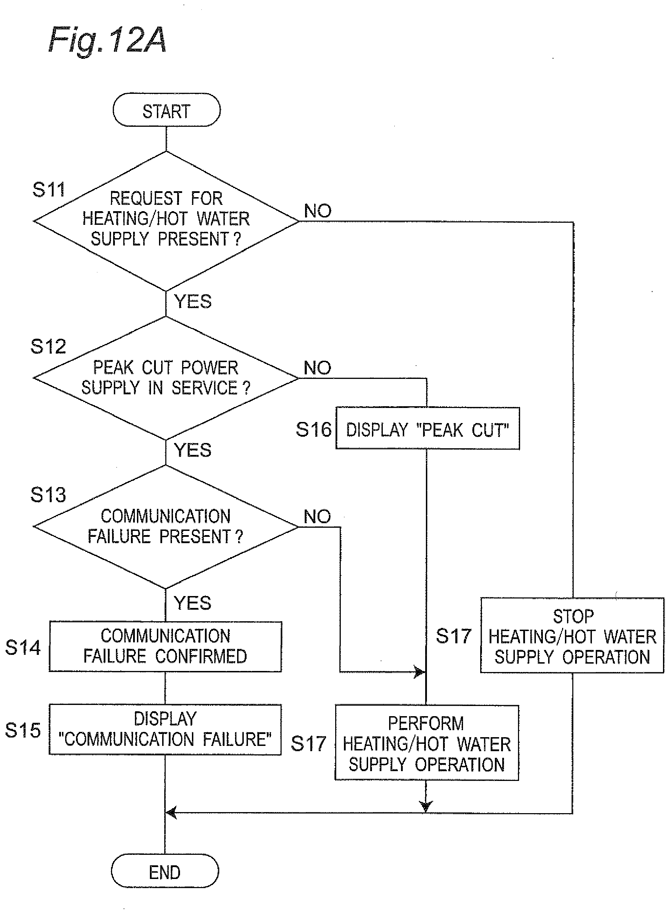

Description is now given of the operation of the heating/hot water supply control section 1033 according to the flow chart shown in Fig. 12A.

First, upon start of the processing, if it is determined in Step S11 that a request for heating/hot water supply operation is present, then the procedure proceeds to Step S12.

Next, it is determined in Step S12 whether or not the peak cut power supply is in service based on a signal from the peak cut power supply detection section 1037. If it is determined in Step S12 that the peak cut power supply is in service, then the procedure proceeds to Step S13, whereas if it is determined that the peak cut power source 1010 is out of service, then the procedure proceeds to Step S16.

Next, it is determined in Step S13 whether or not there is communication failure based on a signal from the communication failure detection section 1035. If it is determined in Step S13 that there is communication failure, then the procedure proceeds to Step S14, whereas if it is determined that there is no communication failure, then the procedure proceeds to Step S17.

Next, after the communication failure is confirmed in Step S14, the procedure proceeds to Step S15, where "communication failure" is displayed on the display section 1036, and the processing is ended. In this case, the display of "communication failure" is not limited to character representation but may be achieved by symbols and hieroglyphic symbols which can notify the occurrence of communication failure.

In Step S16, after displaying "peak cut" on the display section 1036, the procedure proceeds to Step S17, where the heating/hot water supply operation is performed, and the processing is ended. In this case, the display of "peak cut" is not limited to character representation but may be achieved by symbols and hieroglyphic symbols which can notify that peak cut is in progress.

If it is determined that there is no request for heating/hot water supply in Step S11, then the procedure proceeds to Step S18, where the heating/hot water supply operation is stopped, and the processing is ended.

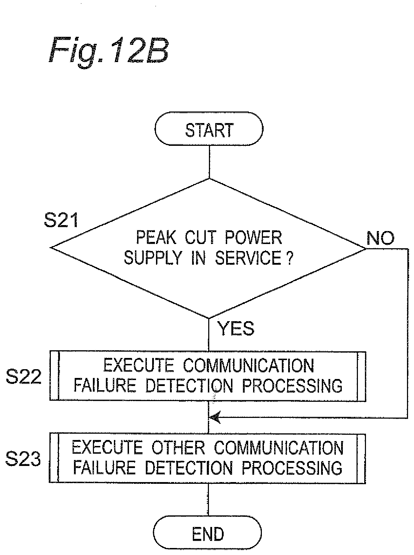

Fig. 12B shows a flow chart explaining operation of failure detection processing to detect failure including communication failure of the heating/hot water supply control section.

Upon start of the failure detection processing, it is determined in Step S2 whether or not peak cut power supply is in service based on a signal from the peak cut power supply detection section 1037. If it is determined in Step S21 that the peak cut power supply is in service, then the procedure proceeds to Step S22, whereas if it is determined that the peak cut power source 1010 is out of service, then the procedure skips Step S22 and proceeds to Step S23.

Next, in Step S22, communication failure detection processing is executed based on a signal from the communication failure detection section 1035.

Next, the procedure proceeds to Step S23, where other failure detection processing is executed, and the processing is ended.

The hot water storage type heater/water heater of the ninth embodiment has the same effect as the hot water storage type heater/water heater of the eighth embodiment except for the communication failure detection processing.

When the peak cut power supply detection section 1037 detects the stop of electric power supply from the peak cut power source 1010, the heating/hot water supply control section 1033 determines that the boiling section 1001 is in a stopped state and continues operation of the heating/hot water supply section 1003. Consequently, the supply interruption of the peak cut power source 1010 is reliably detected, and the operation mode can be shifted to the mode executed by only the heating/hot water supply section 1003.

When the peak cut power supply detection section 1037 detects that the electric power supply from the peak cut power source 1010 is in service, and the communication failure detection section 1035 detects communication failure between the boiling control section 1012 and the heating/hot water supply control section 1033, the heating/hot water supply control section 1033 determines that there is communication failure, and therefore when the electric power supply from the peak cut power source 1010 is out of service, the heating/hot water supply control section 1033 does not determine it as communication failure, so that more reliable determination of communication failure by the heating/hot water supply control section 1033 can be achieved.

Moreover, the status of the electric power supply from the peak cut power source 1010 detected by the peak cut power supply detection section 1037 is displayed on the display section 1036, so that the user can easily grasp the status of the electric power supply from the peak cut power source 1010. Moreover, when the peak cut power supply detection section 1037 detects the stop of electric power supply from the peak cut power source 1010 and the communication failure detection section 1035 detects communication failure between the boiling control section 1012 and the heating/hot water supply control section 1033, the communication failure is not displayed on the display section 1036, and therefore, when the electric power supply from the peak cut power source 1010 is out of service, the user does not accidentally recognize it as a communication failure.

Moreover, the peak cut power supply detection section 1037 detects the stop of electric power supply from the peak cut power source 1010 in response to the peak cut indicating signal outputted from the peak cut power source 1010 to the power supply line, so that it is not necessary to separately provide a circuit for monitoring the voltage from the peak cut power source 1010, and therefore supply interruption of the peak cut power source 1010 can be detected with a simple configuration.

Since a conventional boiling section is often placed outside the residential space such as outdoor space, the temperature such as outside air temperature and incoming water temperature is detected, and if the temperature is lower than prescribed temperature, the boiling circulating pump 1204 is driven to prevent the circulating route from freezing. However, in the present embodiment, when the peak cut power supply detection section 1037 detects the stop of electric power supply from the peak cut power source 1010, the heating/hot water supply control section 1033 drives the boiling circulating pump 1204 with the electric power from a commercial power source and circulates the hot water stored in the hot water storage tank 1201 via the boiling section1001, so that even when the outside air temperature is below zero while the electric supply to the boiling section 1001 is stopped, freezing of the circulating route between the hot water storage tank 1201 and the boiling section 1001 can be prevented. In this case, in order to prevent the hot water in the hot water storage tank 1201 from being cooled by the low outside air temperature as much as possible, there are effective methods such as a method for driving the boiling circulating pump 1204 at predetermined intervals to the extent of preventing freezing so as to intermittently circulate water and a method for continuously circulating water at a small flow rate. These methods can also minimize power consumption resulting from pump drive.

### (Tenth Embodiment)

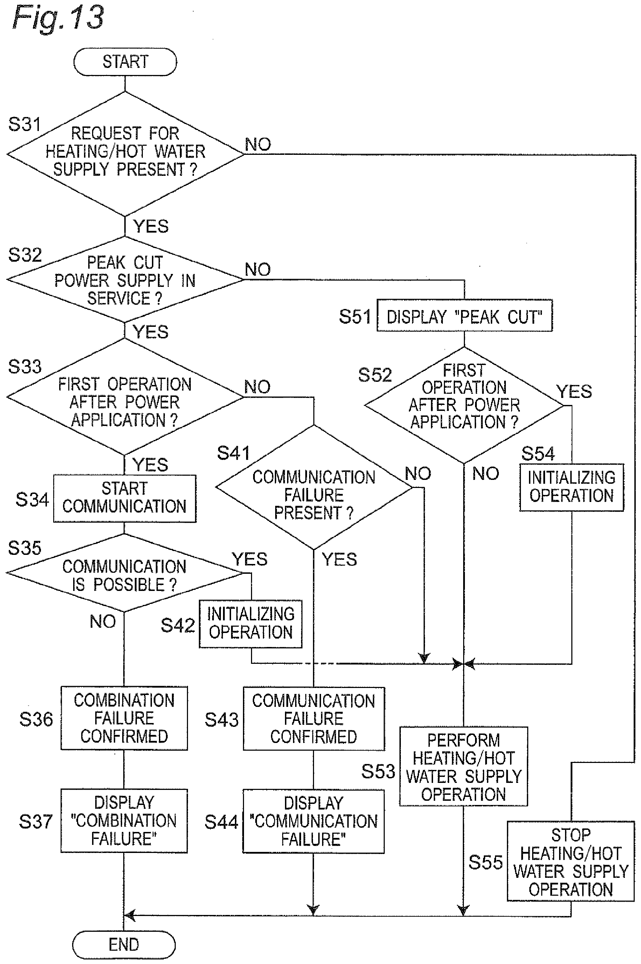

Fig. 13 is a flow chart explaining operation of a heating/hot water supply control section of a hot water storage type heater/water heater as an example of a hot water storage type heat source device of the tenth embodiment of the invention. The hot water storage type heater/water heater of the tenth embodiment has the same configuration as the hot water storage type heater/water heater of the ninth embodiment except for operation of the heating/hot water supply control section, and therefore Fig. 9 and Fig. 11 are referred.

The hot water storage type heater/water heater of the tenth embodiment has, as shown in Fig. 11, a peak cut power supply detection section 1037 for detecting the stop of electric power supply from the peak cut power source 1010.

Description is now given of the operation of the heating/hot water supply control section according to the flow chart shown in Fig. 13.

First, upon start of the processing, if it is determined in Step S31 that a request for heating/hot water supply operation is present, then the procedure proceeds to Step S32.

Next, it is determined in Step S32 whether or not the peak cut power supply is in service based on a signal from the peak cut power supply detection section 1037. If it is determined in Step S32 that the peak cut power supply is in service, then the procedure proceeds to Step S33.

Next, if it is determined that this is the first operation for the heating/hot water supply section 1003 upon power application in Step S33, then the procedure proceeds to Step S34.

In Step S34, communication is started between the heating/hot water supply control section 1033 and the boiling control section 1012.

Next, if it is determined in Step S35 that communication is possible, then the procedure proceeds to Step S42, whereas if it is determined that communication is not possible, then the procedure proceeds to Step S36.

Next, after combination failure is confirmed in Step S36, the procedure proceeds to Step S37, where "combination failure" is displayed on the display section 1036, and the processing is ended. In this case, the "combination failure" refers to the situation where communication is failed between the heating/hot water supply control section 1033 and the boiling control section 1012, so that cooperated operation of the boiling section 1001 and the heating/hot water supply section 1003 cannot be performed. It is to be noted that without being limited to character representation, the display of "combination failure" can be implemented in any form as long as it can notify that the communication is not possible. For example, the display such as "communication start error" may be used, or other symbols and hieroglyphic symbols notifying that the communication is not possible may be employed.

If it is determined in Step S32 that the peak cut power source 1010 is out of service, then the procedure proceeds to Step S51, where "peak cut" is displayed on the display section 1036.

Next, the procedure proceeds to Step S52, and if it is determined that this is the first operation for the heating/hot water supply section 1003 upon power application, then the procedure proceeds to Step S54, where initializing operation is executed and the procedure proceeds to Step S53.

If it is determined that this is not the first operation for the heating/hot water supply section 1003 upon power application in Step S52, then the procedure proceeds to Step S53, where heating/hot water supply operation is executed, and the processing is ended.

If it is determined that this is not the first operation for the heating/hot water supply section 1003 upon power application in Step S33, then the procedure proceeds to Step S41, where it is determined whether or not there is communication failure based on a signal from the communication failure detection section 1035.

If it is determined in Step S41 that there is communication failure, then the procedure proceeds to Step S43, where the communication failure is confirmed, and the procedure proceeds to Step S44. In Step S44, "communication failure" is displayed on the display section 1036, and the processing is ended.

If it is determined that there is no communication failure in Step S41, then the procedure proceeds to Step S53.

It is to be noted that if it is determined that there is no request for heating/hot water supply in Step S31, then the procedure proceeds to Step S55, where heating/hot water supply operation is stopped, and the processing is ended.

Thus, in the case where electric power supply from the peak cut power source 1010 is out of service when the power is applied to the heating/hot water supply section 1003, the heating/hot water supply control section 1033 starts operation of the heating/hot water supply section 1003, and then when supply of the electric power from the peak cut power source 1010 is resumed, the heating/hot water supply section 1003 can communicate with the boiling control section 1012 and perform operation corresponding to the state of the boiling control section 1001 side.

The hot water storage type heater/water heater of the tenth embodiment has the same effect as the hot water storage type heater/water heater of the ninth embodiment.

Although description has been given of the hot water storage type heater/water heater as a hot water storage type heat source device in the eighth to tenth embodiments, the hot water storage type heat source device of the invention may be applied to hot water storage type heaters or water heaters.

It is to be noted that, in the ninth and tenth embodiments, the signal showing the peak cut outputted from the peak cut power source 1010 to the power supply line may be a signal slightly longer than the actual peak cut time. That is, when the electric power supply of the peak cut power source is stopped, the signal notifying the peak cut may be outputted from the peak cut power source before the electric power from the peak cut power source is intercepted, and the output of the signal notifying the peak cut may be stopped after the electric power supply from the peak cut power source is resumed. Accordingly, it becomes possible to regard that the boiling section is in a stopped state before the electric power from the peak cut power source is intercepted. Since communication can be started in the state where the electric power from the peak cut power source is surely returned and the boiling control section is operated, a possibility that communication failure may be detected is completely eliminated and thereby reliability is enhanced.

## Claims

1. A hot water storage type heat source device, comprising:
a boiling section (1001) having a heating section (1011) for heating water with electric power from a peak cut power source (1010) whose power supply may be stopped on account of a power supply side;
a hot water storage section (1002) for storing hot water heated by the boiling section (1001); and
an indoor-side utilization section (1003) for receiving electric power supplied from a commercial power source (1030) other than the peak cut power source (1010) and utilizing the hot water stored in the hot water storage section (1002) as a heat source for at least either heating or hot water supply on an indoor side, wherein
when electric power supply from the peak cut power source (1010) is stopped and thereby the boiling section (1001) is stopped, the indoor-side utilization section (1003) operates with electric power from the commercial power source (1030), **characterized in that**:
the indoor-side utilization section (1003):
has a priority setting section (1033a) for setting a priority between the indoor side heating and the indoor side hot water supply; and
performs the indoor-side heating or the indoor-side hot water supply in preference to either one of the operations based on the priority set by the priority setting section (1033a) when the boiling section (1001) is stopped due to stop of electric power supply from the peak cut power source (1010) and so the indoor-side utilization section (1003) operates with electric power from the commercial power source (1030).

2. The hot water storage type heat source device according to Claim 1, wherein
the indoor-side utilization section (1003) has at least either a heating actuator (1031) for feeding hot water to a heater, or a hot water supply actuator (1032) for feeding hot water to a water heater.

## Patentansprüche

1. Wärmequellenvorrichtung vom Heißwasserspeichertyp, umfassend:
einen Siedeabschnitt (1001), der einen Heizabschnitt (1011) zum Erwärmen von Wasser mit elektrischem Strom von einer Spitzenabschaltstromquelle (1010) aufweist, deren Stromversorgung seitens einer Stromversorgungsseite angehalten werden kann;
einen Heißwasserspeicherabschnitt (1002) zum Speichern von heißem Wasser, das durch den Siedeabschnitt (1001) erwärmt wird; und
einen innenraumseitigen Nutzungsabschnitt (1003) zum Empfangen von elektrischem Strom, der von einer anderen handelsüblichen Stromquelle (1030) als der Spitzenabschaltstromquelle (1010) zugeführt wird, und Nutzen des heißen Wassers, das in dem Heißwasserspeicherabschnitt (1002) gespeichert wird, als eine Wärmequelle entweder als Heizung oder zur Heißwasserversorgung auf einer Innenraumseite, wobei
wenn die elektrische Stromversorgung von der Spitzenabschaltstromquelle (1010) angehalten wird und dadurch der Siedeabschnitt (1001) angehalten wird, der innenraumseitige Nutzungsabschnitt (1003) mit elektrischem Strom aus der handelsüblichen Stromquelle (1030) arbeitet, **dadurch gekennzeichnet, dass**:
der innenraumseitige Nutzungsabschnitt (1003):
einen Prioritätseinstellabschnitt (1033a) zum Einstellen einer Priorität zwischen der innenraumseitigen Heizung und der innenraumseitigen Heißwasserversorgung aufweist; und
die innenraumseitige Heizung oder die innenraumseitige Heißwasserversorgung bevorzugt je nach einem der Betriebe basierend auf der Priorität, die durch den Prioritätseinstellabschnitt (1033a) eingestellt wird, durchführt, wenn der Siedeabschnitt (1001) aufgrund des Abschaltens der Stromversorgung von der Spitzenabschaltstromquelle (1010) abgeschaltet wird, und so der innenraumseitige Nutzungsabschnitt (1003) mit elektrischem Strom aus der handelsüblichen Stromquelle (1030) arbeitet.

2. Wärmequellenvorrichtung vom Heißwasserspeichertyp nach Anspruch 1, wobei
der innenraumseitige Nutzungsabschnitt (1003) mindestens entweder ein Heizungsstellglied (1031) zum Zuführen von heißem Wasser zu einer Heizung oder ein Heißwasserzufuhr-Stellglied (1032) zum Zuführen von heißem Wasser zu einer Wasserheizung aufweist.

## Revendications

1. Dispositif de source de chaleur de type à stockage d'eau chaude, comprenant :
une section d'ébullition (1001) ayant une section de chauffage (1011) pour chauffer de l'eau avec de la puissance électrique provenant d'une source de puissance de coupure de crête (1010) dont l'alimentation électrique peut être arrêtée à cause d'un côté d'alimentation électrique ;
une section de stockage d'eau chaude (1002) pour stocker de l'eau chaude chauffée par la section d'ébullition (1001) ; et
une section d'utilisation côté intérieur (1003) pour recevoir de la puissance électrique apportée depuis une source de puissance commerciale (1030) autre que la source de puissance de coupure de crête (1010) et utiliser l'eau chaude stockée dans la section de stockage d'eau chaude (1002) comme source de chaleur pour au moins le chauffage ou l'alimentation en eau chaude sur un côté intérieur, dans lequel
quand l'alimentation en puissance électrique depuis la source de puissance de coupure de crête (1010) est arrêtée et ainsi la section d'ébullition (1001) est arrêtée, la section d'utilisation côté intérieur (1003) fonctionne avec la puissance électrique provenant de la source de puissance commerciale (1030), **caractérisé en ce que** :
la section d'utilisation côté intérieur (1003) :
a une section de réglage de priorité (1033a) pour régler une priorité entre le chauffage côté intérieur et l'alimentation en eau chaude côté intérieur ; et
effectue le chauffage côté intérieur ou l'alimentation en eau chaude côté intérieur de préférence à l'une ou l'autre des opérations sur la base de la priorité réglée par la section de réglage de priorité (1033a) quand la section d'ébullition (1001) est arrêtée en raison de l'arrêt de l'alimentation en puissance électrique depuis la source de puissance de coupure de crête (1010) et ainsi la section d'utilisation côté intérieur (1003) fonctionne avec la puissance électrique provenant de la source de puissance commerciale (1030).

2. Dispositif de source de chaleur de type à stockage d'eau chaude selon la revendication 1, dans lequel
la section d'utilisation côté intérieur (1003) comporte au moins un actionneur de chauffage (1031) pour apporter de l'eau chaude à un élément chauffant, ou un actionneur d'alimentation en eau chaude (1032) pour apporter de l'eau chaude à un chauffe-eau.
